(19) **Europäisches Patentamt / European Patent Office / Office européen des brevets**

(11) **EP 1 271 850 B1**

(12) **EUROPEAN PATENT SPECIFICATION**

(45) Date of publication and mention of the grant of the patent:
**14.03.2007 Bulletin 2007/11**

(21) Application number: **02013786.5**

(22) Date of filing: **21.06.2002**

(51) Int Cl.:
*H04L 12/28* (2006.01)  *H04L 1/18* (2006.01)

(54) **Method for carrying out communications among plural stations**

Verfahren zur Durchführung der Kommunikation unter mehreren Stationen

Procédé d'établissement de communications entre une pluralité de stations

(84) Designated Contracting States:
**DE FR GB**

(30) Priority: **22.06.2001 JP 2001189232**

(43) Date of publication of application:
**02.01.2003 Bulletin 2003/01**

(60) Divisional application:
**05020443.7 / 1 615 385**

(73) Proprietor: **MATSUSHITA ELECTRIC INDUSTRIAL CO., LTD.**
**Kadoma-shi, Osaka-fu (JP)**

(72) Inventors:
  • **Ohmi, Shinichiro**
    **Toyono-gun,**
    **Osaka-fu (JP)**

  • **Harada, Yasuo**
    **Kobe-shi,**
    **Hyogo-ken (JP)**
  • **Ando, Kazuhiro**
    **Hirakata-shi,**
    **Osaka-fu (JP)**

(74) Representative: **Eisenführ, Speiser & Partner**
**Patentanwälte Rechtsanwälte**
**Postfach 10 60 78**
**28060 Bremen (DE)**

(56) References cited:
**EP-A- 0 768 806**    **EP-A- 0 818 905**
**EP-A- 0 899 920**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

**EP 1 271 850 B1**

**Description**

BACKGROUND OF THE INVENTION

Field of the Invention

The present invention relates to communications methods and, more specifically, to a communications method for streaming video or others through a wireless network.

Description of the Background Art

Conventionally, for data exchanges between personal computers (PCs) or between a host computer and a PC, a wired network has been used, such as Ethernet specified in IEEE 802.3. In addition, a wireless network as specified in IEEE 802. 11 has also come in use in recent years.

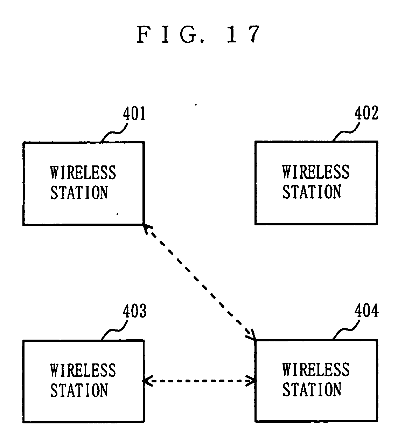

With reference to FIGS. 17 to 20, described below are transmission schemes on a wireless network, which are specified in IEEE 802.11. IEEE 802 .11 specifies two schemes: One is a scheme for communications by polling access carried out on a network having a control station for controlling communications between wireless stations, and the other is a scheme for communications by random access carried out on a network where no control station is provided and wireless stations obtain permission for communications by themselves.

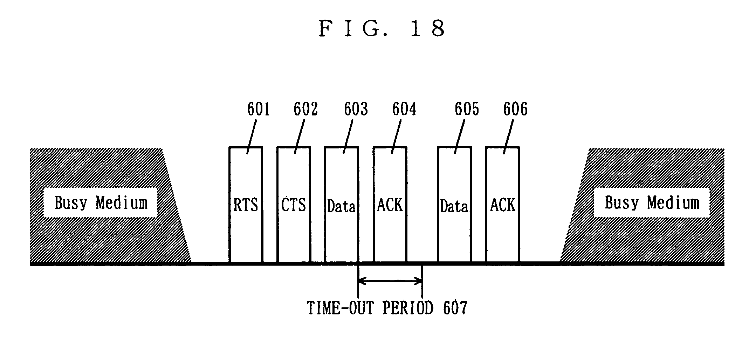

FIG. 17 is a block diagram illustrating a conventional network configured by wireless stations without any control station. FIG. 18 is a timing chart showing a conventional communications scheme by random access carried out on the network of FIG. 17. In IEEE 802.11, the communications scheme is specified as a DCF (distributed coordination function) procedure. Hereinafter, described is an example of the DCF procedure, where data is transmitted from a wireless station 401 to a wireless station 404.

First, a data transmitting station having data to be sent (wireless station 401) checks to see whether a wireless channel is in use. If not in use, a data receiving station (wireless station 404) sends, after a random time interval, an RTS (request to send) packet 601 to the data receiving station (wireless station 404) for requesting for permission to send data. The RTS packet 601 is sent after a random interval in order to avoid conflicts of RTS packets simultaneously coming from plural stations.

On receiving the RTS packet 601, the data receiving station (wireless station 404) sends a CTS (clear to send) packet 602 for permitting the data transmitting station to send data. On receiving the CTS packet 602, the data transmitting station (wireless station 401) sends a Data packet 603. If the Data packet 603 has been successfully received, the data receiving station (wireless station 404) sends an ACK (acknowledgement) packet 604 for acknowledging receipt, thereby reporting to the data transmitting station (wireless station 401) that the data has been successfully received.

If the Data packet 603 has an error, the ACK packet 604 is not sent from the data receiving station (wireless station 404). After waiting for a time-out period 607 to receive the ACK packet 604 but in vain, the data transmitting station (wireless station 401) re-sends a Data packet 605 identical to the Data packet 603. If the Data packet 605 has been successfully received, the data receiving station (wireless station 404) sends an ACK packet 606. If the ACK packet 606 has been successfully received, the data transmitting station (wireless station 401) ends the access.

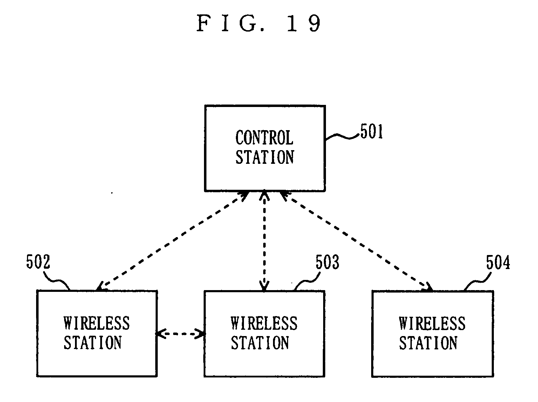

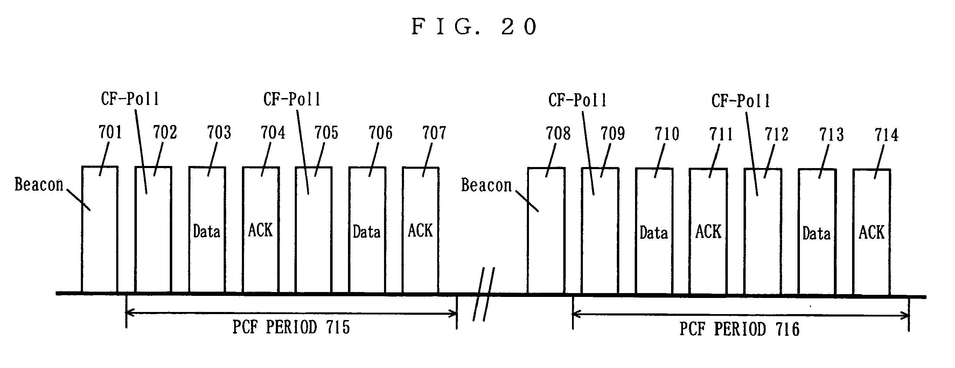

FIG. 19 is a block diagram illustrating another conventional network configured by a control station and a wireless station. FIG. 20 is a timing chart showing a conventional communications scheme by polling access. In IEEE 802.11, the communications scheme by polling access is specified as a PCF (point coordination function) procedure. Hereinafter, described is an example of the PCF procedure, where a wireless station 502 sends data to a control station 501, then the control station 501 does to a wireless station 503, then a wireless station 504 does to the control station 501, and then a wireless station 502 does to the wireless station 503.

First, the control station 501 sets a PCF period 715 by sending a Beacon packet 701. After the PCF period is set, all wireless stations 502 to 504 cannot send packets unless the control station 501 permits them to do so.

When the PCF period 715 is started, the control station 501 first sends a CF-Poll packet 702 to the wireless station 502. After a predetermined time has passed, the control station 501 sends a CF-Poll packet 705 to the wireless station 503. The CF-Poll packet is a packet for permitting a specific wireless station to send packets. The CF-Poll packet 702 provides the wireless station. 502 with permission for packet transmission in the first half of the PCF period 715 , and the CF-Poll packet 705 provides the wireless station 503 with permission for packet transmission in the second half thereof.

The data transmitting station (wireless station 502) permitted by the CF-Poll packet 702 sends a Data packet 703. If the Data packet 703 has been successfully received, the data receiving station (control station 501) sends an ACK (acknowledgment) packet 704 for reporting to the data transmitting station (wireless station 502) that the data has been successfully received, and then ends the access.

Next, the data transmitting station (control station 501) sends a Data packet 706. If the Data packet 706 has been successfully received, the data receiving station (wireless station 503) permitted by the CF-Poll packet 705 sends an ACK (acknowledgement) packet 707 for reporting to the data transmitting station that the data has been successfully received, and then ends the access.

When the PCF period 715 has passed, the control station 501 suspends CF-Poll packet transmission. Then, after a predetermined time has passed, the control station 501 sends a Beacon packet 708 for setting a next PCF period 716. Then, the wireless station 504 is provided with permission for packet transmission in the first half of the PCF period 716, while the wireless station 502 in the second half thereof. Then, Data packets 710 and 713 are sent, and then ACK packets 711 and 714 are sent for acknowledgement in a manner similar to the above.

Note that, in the above examples, two wireless stations are provided with permission for packet transmission in a single PCF period. However, only a single, or three or more wireless stations may be provided with such permission.

In the above-described conventional communications scheme, PCs can be connected to each other via a wireless network for data exchange.

In recent years, not only PCs, but also a set-top box or a video player, and a television set are connected to each other via a wireless network for streaming video or others. For this purpose, a large amount of data has to be sent at high speed on a real-time basis by using a limited band. Therefore, unlike conventional burst-like data exchange between PCs, high transmission efficiency has to be achieved.

However, in the conventional communications schemes as those in IEEE 802.11, video streaming via a wireless network is not anticipated. Therefore, the transmission efficiency cannot sufficiently increased.

EP-A-0 768 806 discloses a method for carrying out communications among plural mobile stations, wherein any one of the plural stations serves as a master mobile station for controlling the communications among the plural mobile stations, wherein the master mobile stations selects a pair of mobile stations from the plural mobile stations as a transmitting mobile station and a receiving mobile station, and provides the pair of mobile stations with permission for communications. The transmitting mobile station calculates the number of data packets transmittable in a specified time period. The transmitting mobile station successively sends a series of data packets not more than the calculated number of data packets. The receiving mobile stations starts reception of the series of data packets coming from the transmitting mobile station. The receiving mobile station sends an acknowledgement packet to the transmitting mobile station when it has completed the reception of the series of data packets.

The EP-A-0 899 920 describes a radio communication system including a plurality of radio communication terminals and a radio communication control terminal for controlling radio communication, comprising radio communication means having transmitting means and receiving means; and radio communication control means having controlling means, transmitting means, and receiving means for controlling communication performed by said radio communication means, wherein asynchronous data and/or isochronous data is transferred through a radio communication path for communication among a plurality of said radio communication means.

The EP-A-0 818 905 discloses a communications network having a plurality of stations and a shared common communications medium using a collision avoidance media access protocol for communication between said stations; in which medium access is granted to a pair of stations obtaining a successful reservation of said medium; said pair of stations comprising a requester station and a target station, said requester station comprises a primary station, and said target station comprises a secondary station; wherein said primary station coordinates communication to said secondary station; the roles of said primary and secondary stations being interchangeable within said reservation, wherein said primary station becomes a secondary station and said secondary station becomes a primary station for communication therebetween.

SUMMARY OF THE INVENTION

Therefore, an object of the present invention is to provide a communications scheme for achieving high transmission efficiency, thereby enabling high-speed streaming of video or others via a wireless network.

This object is solved by the features of claim 1. Embodiments of the invention are described by the features of claims 2 to 5.

A first aspect is directed to a method for carrying out communications among plural stations by using a single wireless channel in a time-division manner, wherein
any one of the plural stations serves as a control station for controlling the communications among the plural stations, the method including:

a step, carried out by the control station, of selecting a pair of stations from the plural stations as a transmitting station and a receiving station, and providing the pair of stations with permission for the communications using the wireless channel in a specified time period P;
a step, carried out by the transmitting station, of calculating the number of data packets transmittable in the specified time period P;

a step, carried out by the transmitting station, of successively sending a series of data packets not more than the calculated number of data packets;

a step, carried out by the receiving station, of starting reception of the series of data packets coming from the transmitting station; and

a step, carried out by the receiving station, of sending a response packet to the transmitting station when completing the reception of the series of data packets.

In the first aspect, any one of stations serves as a control station. The control station selects a pair of a transmitting station and a receiving station, and provides permission for communications carried out in a predetermined time period P. Then, the transmitting station successively sends a series of data packets in the specified time period P. On receiving the series of data packets, the receiving station sends a response packet. Thus, compared with a case where a response packet is sent for every data packet received, the number of response packets sent per unit time can be reduced. This reduction can increase the number of data packets to be sent, and therefore can achieve higher transmission efficiency.

According to a second aspect, in the first aspect, the communications method further includes

a step, carried out by the control station when determining that no data to be transmitted has been left in the transmitting station, of withdrawing the permission for the communications provided to the transmitting station and the receiving station even before the specified time period P passes.

In the second aspect, if the pair of stations provided with permission for communications has completed communications before the specified time period P passes, the control station forcefully terminates the permission for communications. Therefore, the next pair of stations can be moved up for permission for starting communications. This makes data transfer more efficient.

According to a third aspect, in the second aspect, the communications method further includes a step, carried out by the control station, of sending the pair of stations a report packet containing permission for the communications and the specified time period P;

a step, carried out by the transmitting station, of receiving the report packet coming from the control station, wherein the calculating step and the data-packet sending step are carried out based on contents of the report packet;

a step, carried out by the receiving station, of receiving the report packet coming from the control station, wherein the data-packet receiving step and the response-packet sending step are carried out based on the contents of the report packet.

In the third aspect, the provided permission for communications and the specified time period P are sent via a report packet form the control station to the pair of stations. Thus, the control station can make the pair of stations to communicate with each other using the wireless channel in the specified time period P.

According to a fourth aspect, in the second aspect, the communications method further includes :

a step, carried out by the transmitting station, of sending a response request packet to the receiving station after the series of data packets has been sent; and

a step, carried out by the receiving station, of determining, based on the response request packet received from the transmitting station, that the series of data packets has been received.

In the fourth aspect, the transmitting station sends the series of data packets, and then a response request packet. On receiving the response request packet, the receiving station determines that the series of data packets has been received, and sends a response packet.

According to a fifth aspect, in the fourth aspect,

in the data-packet sending step and the response-request-packet sending step, the transmitting station sends the series of data packets and the response request packet at intervals of a non-transmission time $\alpha$, and

in the permission withdrawing step, when detecting a non-transmission time $\gamma$ longer than the non-transmission time $\alpha$, the control station withdraws the permission for the communications provided to the pair of stations.

In the fifth aspect, by detecting the non-transmission period $\gamma$ longer than the non-transmission period $\alpha$, the control station determines that no data to be transmitted has been left in the transmitting station, and withdraws the permission for communications.

According to a sixth aspect, in the second aspect,

in the data-packet sending step, the transmitting station sends the series of data packets at intervals of a non-transmission time $\alpha$, and

the method further includes a step, carried out by the receiving station, of determining, when detecting a non-transmission time $\beta$ longer than the non-transmission time $\alpha$, that the series of data packets has been received.

In the sixth aspect, by detecting the non-transmission period $\beta$ longer than the non-transmission period $\alpha$, the receiving station determines that the series of data packets has been received, and sends a response packet.

According to a seventh aspect, in the sixth aspect, the communications method further includes a step, carried out by the control station when detecting a non-transmission time γ longer than a non-transmission time β, of determining that no data to be transmitted has been left in the transmitting station, and withdrawing the permission for the communications provided to the pair of stations.

In the seventh aspect, by detecting the non-transmission period γ longer than the non-transmission period β, the control station determines that no data to be transmitted has been left in the transmitting station, and withdraws the permission for communications.

According to an eighth aspect, in the first aspect, in the selecting step, the control station selects the pair of stations by referring to a polling list having plural pairs of wireless stations registered therein.

In the eighth aspect, plural wireless stations desiring to communicate with one another are registered in a polling list. The control station refers to the polling list to select one pair, and provides permission for communications.

According to a ninth aspect, in the eighth aspect, in the selecting step, the control station selects the pair of stations based on a priority level assigned to each of the pairs of wireless stations registered in the polling list.

In the ninth aspect, each pair is assigned a priority level. The control station determines one pair based on the priority level.

According to a tenth aspect, in a first aspect, the response packet sent by the receiving station contains a state of reception of a series of data packets received before the report packet was received.

In the tenth aspect, the response packet contains the state of reception of the series of data packets received before the report packet comes. Therefore, if any data packet has an reception error, the transmitting station can re-send the data packet when provided with permission for communications next.

An eleventh aspect is directed to a method for carrying out communications among plural stations by using a single wireless channel in a time-division manner, and the method includes:

a step, carried out by a pair of stations included in the plural stations that has data to be sent and received, of determining whether the wireless channel is in use;

a step, carried out by the pair of stations, of obtaining, when the wireless channel is not in use, permission for the communications via the wireless channel in a specific time period P, and serving as the transmitting station and the receiving station;

a step, carried out by the transmitting station, of calculating the number of data packets transmittable in the specified time period P;

a step, carried out by the transmitting station, of successively sending a series of data packets not more than the calculated number of data packets;

a step, carried out by the receiving station, of starting reception of the series of data packets coming from the transmitting station; and

a step, carried out by the receiving station, of sending a response packet to the transmitting station when completing the reception of the series of data packets.

In the eleventh aspect, the stations having data to be sent and received determines whether the wireless channel should be used. If not in use, they obtain permission for communications in the specified time period P, serving as a transmitting station and a receiving station. Thereafter, the transmitting station successively sends a series of data packets in the specified time period P. The receiving station receives the series of data packets, and then sends a response packet. Thus, compared with a case where a response packet is sent for every data packet received, the number of response packets sent per unit time can be reduced. This reduction can increase the number of data packets to be sent, and therefore can achieve high transmission efficiency.

According to a twelfth aspect, in the eleventh aspect, the communications method further includes a step, carried out by the transmitting station and receiving station when determining that no data to be transmitted has been left in the transmitting station, of withdrawing the permission for the communications provided to the transmitting station and the receiving station even before the specified time period P passes.

In the twelfth aspect, if the transmitting station and the receiving station have completed communications before the specified time period P passes, the permission provided to these stations for communications is forcefully terminated. Thus, Other transmitting station and receiving station can be moved up for permission for starting communications. This makes data transfer more efficient.

According to a thirteenth aspect, in the twelfth aspect, the communications method further includes:

a step, carried out by the transmitting station, of sending, when it is determined in the determining step that the wireless channel is not in use, a request packet to the receiving station after a random time passes;

a step, carried out by the receiving station, of sending a permission packet to the transmitting station in receipt of the request packet from the transmitting station; and

a step, carried out by the transmitting station, of obtaining permission for the communications by receiving the permission packet from the receiving station, and sending the receiving station a report packet containing the permission for the communications and the specified time period P.

In the thirteenth aspect, when the wireless channel is not in use, the transmitting station sends a request packet to the receiving station after a random time has passed. In response to the request packet from the transmitting station, the receiving station sends a respond packet. By receiving the response packet from the receiving station, the transmitting station obtains permission for the communications, and sends a report packet to the receiving station.

According to a fourteenth aspect, in the twelfth aspect, the communication method further includes:

a step, carried out by the transmitting station, of sending, when it is determined in the determining step that the wireless channel is not in use, a request packet to the receiving station after a random time passes; and

a step, carried out by the receiving station, of obtaining the permission for the communications by receiving the request packet from the transmitting station, and sending the receiving station a report packet containing the permission for the communications and the specified time period P.

In the fourteenth aspect, when the wireless channel is not in use, the transmitting station sends a request packet to the receiving station after a random time has passed. By receiving the request packet from the transmitting station, the receiving station obtains permission for the communications, and sends a report packet to the transmitting station.

According to a fifteenth aspect, in the twelfth aspect, the communications method further includes:

a step, carried out by the transmitting station, of sending a response request packet to the receiving station after the series of data packets has been sent; and

a step, carried out by the receiving station, of determining, based on the response request packet received from the transmitting station, that the series of data packets has been received.

In the fifteenth aspect, the transmitting station sends a series of data packets, and then a response request packet. On receiving the response request packet, the receiving station determines that the series of data packets has been received, and sends a response packet.

According to a sixteenth aspect, in the fifteenth aspect, in the withdrawing step, after transmitting the response packet and when detecting a non-transmission time $\gamma$ longer than the non-transmission time $\alpha$, the receiving station determines that no data to be transmitted has been left in the transmitting station, and withdraws the permission for the communications provided to the receiving station.

According to a seventeenth aspect, in the twelfth aspect,

in the data-packet sending step, the transmitting station sends the series of data packets at intervals of a non-transmission time $\alpha$, and

the method further includes a step, carried out by the receiving station, of determining, when detecting a non-transmission time $\beta$ longer than the non-transmission time $\alpha$, that the series of data packets has been received.

In the seventeenth aspect, the transmitting station sends a series of data packets at intervals of non-transmission time period $\alpha$. When detecting the non-transmission time $\beta$ longer than the non-transmission time $\alpha$, the receiving station determines that the series of data packets has been received, and sends a response packet.

According to an eighteenth aspect, in the seventeenth aspect, in the withdrawing step, after transmitting the response packet and when detecting a non-transmission time $\gamma$ longer than the non-transmission time $\beta$, the receiving station determines that no data to be transmitted has been left in the transmitting station, and withdraws the permission for the communications provided to the receiving station.

A nineteenth aspect is directed to a report packet used in a communications method for carrying out communications among plural stations using a single wireless channel in a time-division manner, the method for selecting a pair of stations from the plural stations and providing the selected pair with permission for the communications using the wireless communications in a specific time period, the report packet for reporting the provided permission to the selected pair of stations, and the report packet includes:

identifiers of the selected stations;

the specific time period; and

the permission provided to the pair of stations for communications via the wireless channel in the specific time period.

By sending the report packet according to the nineteenth aspect to the pair of stations, the pair of stations can know the provided permission for communication and the specified time period P. Thus, the pair of stations can communicate with each other by using a wireless channel in the specified time period P.

A twentieth aspect is directed to a response packet used in a communications method for carrying out communications among plural stations using a single wireless channel in a time-division manner, the method for selecting a pair of stations from the plural stations as a transmitting station and a receiving station and providing the selected pair with permission for the communications using the wireless communications in a specific time period, the response packet sent from the receiving station to the transmitting station after a report packet for reporting the permission for the communications to the transmitting station and the receiving station is sent and then the series of data packets are sent from the transmitting station to the receiving station, and the response packet includes:

an identifier of the transmitting station; and
a state of reception of the series of data packets received before the receiving station receives the report packet.

The acknowledge packet according to the twentieth aspect contains the state of reception of the series of data packets received by the receiving station before the report packet comes. If any data packet has a reception error, the transmitting station can re-send the data packet when provided with permission for communication.

These and other objects, features, aspects and advantages of the present invention will become more apparent from the following detailed description of the present invention when taken in conjunction with the accompanying drawings.

BRIEF DESCRIPTION OF THE DRAWINGS

FIG. 1 is a block diagram illustrating the configuration of a wireless network system according to first and third embodiments of the present invention;
FIG. 2 is a block diagram illustrating an example of configuration of a control station 1 and wireless stations 2 to 4 of FIG. 1;
FIG. 3 shows memory maps illustrating (a) the contents of ROM incorporated in the control station 1 of FIG. 1, and (b) the contents of ROM incorporated in each of the wireless stations 2 to 4 of FIG. 1;
FIG. 4 is a flowchart showing a polling process carried out by the control station 1 of FIG. 1;
FIG. 5 is a diagram illustrating an example of a polling list to be referred to by the control station 1 of FIG. 1;
FIG. 6 is an illustration showing an example of structure of a CF-Multipoll packet;
FIG. 7 is an illustration showing an example of structure of a DelayAck packet;
FIG. 8 is a flowchart showing a communications process carried out by each of the wireless stations 1 to 4 of FIG. 1;
FIG. 9 is a flowchart showing the detail of step S201 of FIG. 8;
FIG. 10 is a timing chart showing an example of wireless communications carried out in a polling access period in the system of FIG. 1;
FIG. 11 is a timing chart illustrating an example of wireless communications carried out in a random access period in the system of FIG. 1;
FIG. 12 is a block diagram illustrating the configuration of a wireless communications system according to a second embodiment of the present invention;
FIG. 13 is a flowchart showing a communications process carried out by each of the wireless stations 1 to 4 of FIG. 1 in the third embodiment;
FIG. 14 is a flowchart showing the details of step S201 of FIG. 13;
FIG. 15 is a timing chart showing an example of wireless communications carried out in the polling access period in the system of FIG. 1 (third embodiment);
FIG. 16 is a timing chart illustrating an example of wireless communications carried out in the random access period in the system of FIG. 1 (third embodiment);
FIG. 17 is a block diagram illustrating a conventional network configured by wireless stations without any control station;
FIG. 18 is a timing chart showing a conventional communications scheme by random access carried out on a network of FIG. 17;
FIG. 19 is a block diagram illustrating another conventional network configured by a control station and wireless stations; and
FIG. 20 is a timing chart showing a conventional communications scheme by polling access carried out on the network of FIG. 19.

DESCRIPTION OF THE PREFERRED EMBODIMENTS

Hereinafter described in detail are embodiments of the present invention with reference to the drawings.

(First embodiment)

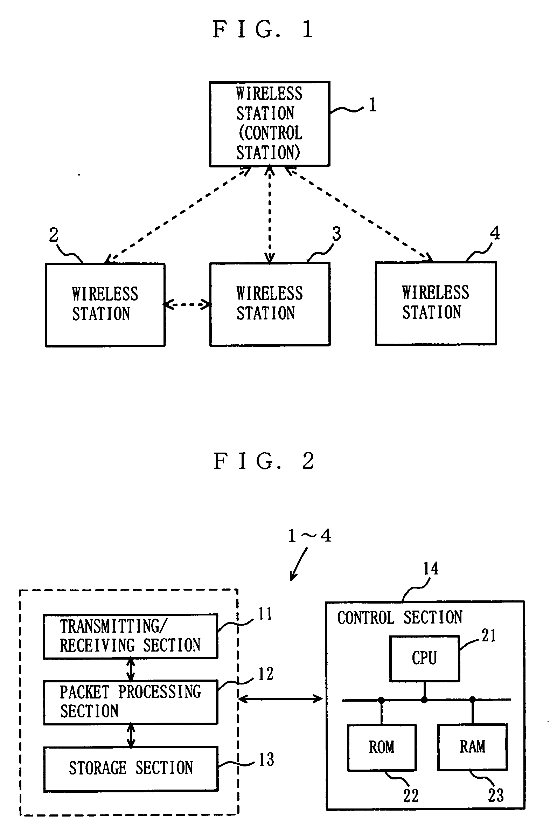

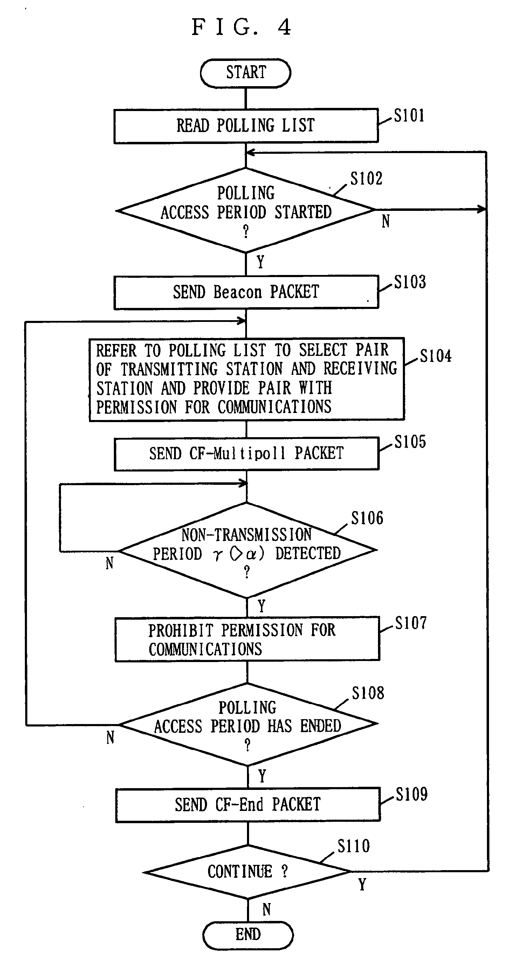

FIG. 1 is a block diagram illustrating the configuration of a wireless network system according to a first embodiment of the present invention. In FIG. 1, the wireless network system is configured by four wireless stations 1 to 4 for carrying out wireless communications with one another. One of these wireless stations 1 to 4 is capable of not only carrying out wireless communications but also controlling communications among the wireless stations 1 to 4, including itself. Such wireless station is hereinafter assumed to be the wireless station 1, and is called "control station 1" if required to be distinguished from the other wireless stations 2 to 4.

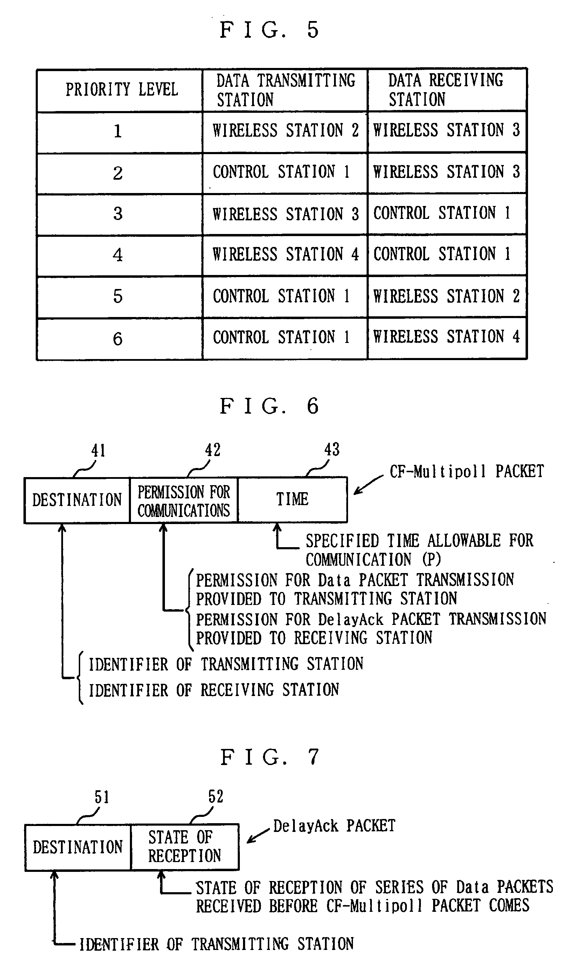

FIG. 2 is a block diagram illustrating an example of configuration of each of the wireless stations 1 to 4 of FIG. 1. In FIG. 2, each of the wireless stations 1 to 4 includes a transmitting/receiving section 11, a packet processing section 12, a storage section 13, and a control section 14. The storage section 13 stores data. In the control station (wireless station 1), the storage section 13 further stores a polling list (refer to FIG. 5; will be described later).
The transmitting/receiving section 11 transmits and receives packets. The packet processing section 12 carries out processes such as packeting data to be sent, unpacketing received packet for data extraction, etc. The control section 14 includes a CPU 21, ROM 22, and RAM 23 for controlling each of the above components.

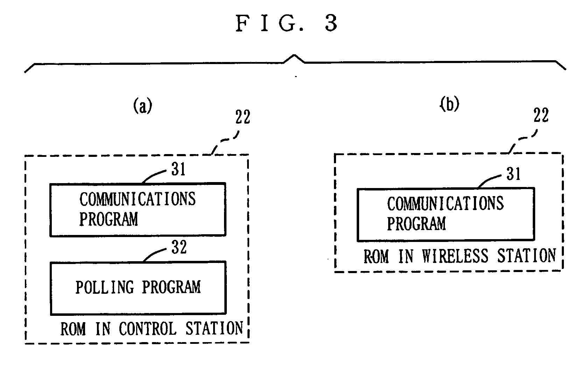

In FIG. 3, (a) is a memory map illustrating the contents of the ROM incorporated in the control station 1 of FIG. 1, and (b) is a memory map illustrating the contents of the ROM incorporated in each of the wireless stations 2 to 4 of FIG. 1. In (a) of FIG. 3, the ROM of the control station 1 stores a communications program 31 and a polling program 32. In (b) of FIG. 3, the ROM of each wireless station stores the communications program 31.
With the CPU using the RAM as a working area, the control section 14 of each of the control station 1 and the wireless stations 2 to 4 operates by following the program 31 stored in the ROM shown in (b) of FIG. 3 (and, for the control section 14 of the control station 1, also the program 32 stored in the ROM shown in (b) of FIG. 3) for carrying out processes as described below.
Described first is the operation of the control station 1. FIG. 4 is a flowchart showing the polling process carried out by the control station 1 (the control section 14 included therein) of FIG. 1. In FIG. 4, when the control station 1 is activated, the control section 14 reads the polling list stored in the storage section 13 into the RAM (step S101). Then, whether a polling access period has been started or not is determined (step S102). If the polling access period has not yet been started, the control station 1 does not carry out polling control, but operates in random access mode (will be described later), similarly to the other wireless stations 2 to 4.
If the polling access period has been started, the control section 14 sends a Beacon packet (step S103).
The Beacon packet is a packet for reporting to each of the wireless stations 1 to 4 that the polling access period has been started. With the Beacon packet sent by the control station 1, the polling access period, which is a predetermined time period, is set. During the polling access period, the wireless stations 1 to 4 cannot carry out packet communications unless they are provided with permission for communications.
The control section 14 then refers to the polling list for selecting any one of pairs of a transmitting station and a receiving station registered in the polling list to provide the pair with permission for communications (step S104).
Here, step S104 is described in detail below. FIG. 5 is an illustration showing an example of the polling list to be referred to by the control station 1 of FIG. 1 at the time of polling. The polling list contains all pairs of a transmitting station and a receiving station that desire to communicate with each other in the polling access period (six pairs are exemplarily shown in FIG. 5). Furthermore, each pair has a priority level (1 to 6) set therein.
The priority level is determined based on the property of data to be sent and received by the pair. For example, a higher priority level is given to a pair that transmits and receives video data for streaming playback on a real-time basis (that is, no delay is permitted). A lower priority level is given to a pair that transmits and receives control data that allows some delay.
The control station 1 refers to the polling list as illustrated in FIG. 5 for sequentially selecting the pairs in decreasing order of priority (1 -> 2 -> ... -> 6). After all pairs have been selected once, the first one is selected again (6 - > 1), and then the remaining ones are selected in decreasing order of priority (1 -> 2 -> ... -> 6 -> 1 -> 2 -> ...).
The control section 14 then sends a CF-Multipoll packet to the transmitting station and the receiving station selected in step S104 (step S105).
The CF-Multipoll packet is a packet for reporting, to the pair of wireless stations provided with permission for communications (a transmitting station and a receiving station), the contents of the permission and a specific time period P (that is, the length of a communications allowable time). An example of structure of the CF-Multipoll is illustrated in FIG. 6.
In FIG. 6, the CF-Multipoll packet contains a destination 41, permission for communications 42, and a time 43. The destination contains identifiers of the selected stations in pair (that is, the transmitting station and the receiving station). The permission for communications contains permission for Data packet transmission provided to the transmitting station and permission for DelayAck packet transmission provided to the receiving station. The time contains a specified communications allowable time period (that is, the length of allowable time for communications between the transmitting station and the receiving station using a wireless channel), "P1", for example.

On receiving the CF-Multipoll packet, the transmitting station and the receiving station can carry out communications by using the wireless channel in a period from the reception of the packet to the end of the time period P1. During that period, the transmitting station successively sends one or more Data packets at intervals of time $\alpha$, while the receiving station receives the series of the Data packets from the transmitting station, and sends a DelayAck packet after reception has been completed. An example of structure of the DelayAck packet is illustrated in FIG. 7.

In FIG. 7, the DelayAck packet contains a destination 51 and a state of reception 52. The destination contains an identifier of the transmitting station. The state of reception contains the state of reception of a series of Data packets received from the transmitting station (that is, Data packets received when communications was permitted at the previous time).

Referring back to FIG. 4, the control station 1 then determines whether a non-transmission time $\gamma$ ($> \alpha$) has been detected (step S106). If the non-transmission time has not been detected, the control station 1 enters a wait state. If the non-transmission time has been detected in step S106, the control station 1 prohibits the pair selected in step S104 from communicating with each other (step S107). The control station 1 then determines whether the polling access period has ended (step S108). If the polling access period has not ended, the procedure returns to step S104 for selecting the next pair. Thereafter, the same operation as mentioned above is repeated.

If it is determined in step S108 that the polling access period has ended, the control section 14 sends a CF-End packet (step S109).

Here, the CF-End packet is a packet for reporting to each of the wireless stations 1 to 4 that the polling access period has ended. For the wireless stations 1 to 4, the polling access period set in step S103 ends by the control section 1 sending the CF-End packet. During a period from the end of the polling access period to the start of the next polling access period, each of the wireless stations 1 to 4 can spontaneously carry out packet communications without being allowed to do so by the control station 1. This period is hereinafter called "random access period".

The control section 14 determines whether to continue the control operation (step S110). If the control section 14 determines to continue, the procedure returns to step S102 for repeating the same process as mentioned above. If the control section 14 determines not to continue, the control operation is ended.

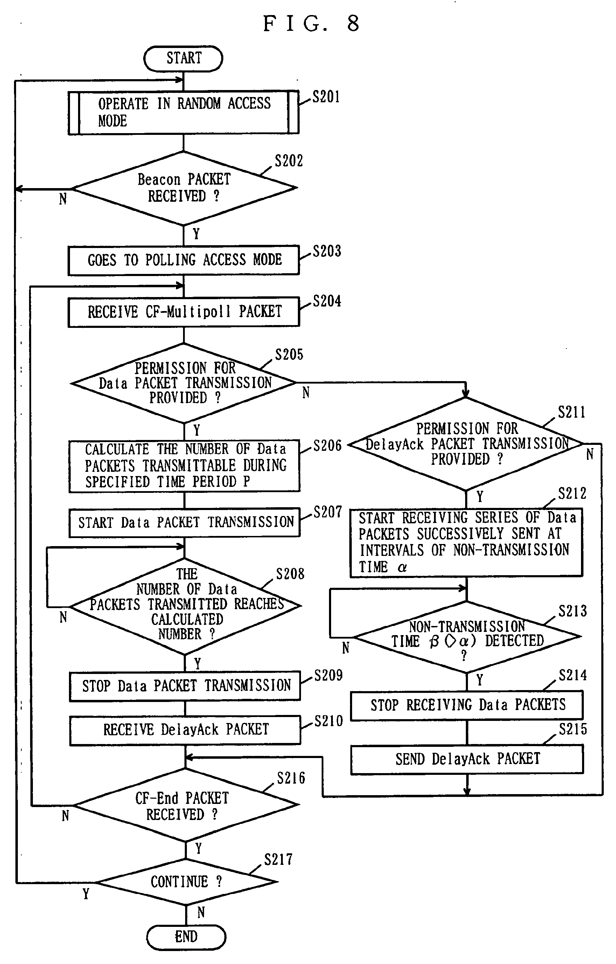

Described next is the operation of each of the wireless stations 1 to 4. FIG. 8 is a flowchart showing a communications process carried out by each of the wireless stations 1 to 4 (each control section 14) of FIG. 1. In FIG. 8, when the wireless stations 1 to 4 are activated, the control section first operates in random access mode (step S201). The operation in random access mode will be described later.

The control section 14 then determines whether the Beacon packet has been received (step S202). If the Beacon packet has not been received, the procedure returns to step S201. If it is determined in step S202 that the Beacon packet has been received, the control section 14 goes into polling access mode (step S203).

In polling access mode, the control section 14 first receives the CF-Multipoll packet (step S204), and then determines whether the packet contains permission for Data packet transmission (step S205).

If it is determined in step S205 that the packet contains such permission, the control section 14 reads the time period P1 from the CF-Multipoll packet for calculating the number of Data packets transmittable in the time period P1 (step S206).

The control section 14 then instructs the packet processing section 12 and the packet transmitting/receiving section 11 to start packeting the data stored in the storage section 13 into Data packets and sending them at time intervals $\alpha$ (step S207).

The control section 14 determines whether the number of Data packets sent based on the instruction in step S207 has reached the number calculated in step S206 (step S208). If the number of Data packets has reached the calculated number, the control section 14 lets the packet processing section 12 and the packet transmitting/receiving section 11 continue to generate and send Data packets. If it is determined in step S208 that the number of Data packets has reached the calculated number, the control section 14 makes the packet processing section 12 and the packet transmitting/receiving section 11 stop generating and sending Data packets (step S209). The control section 14 then receives a DelayAck packet (step S210). The procedure then goes to step S216 (will be described later).

If it is determined in step S205 that the packet does not contain the permission, the control section 14 determines whether the received CF-Multipoll packet contains the permission for DelayAck packet transmission (step S211). If the CF-Multipoll packet contains such permission, the control section 14 instructs the transmitting/receiving section 11 and the packet processing section 12 to start receiving the series of Data packets successively coming at the time intervals $\alpha$, extracting data from each packet, and storing the data in the storage section 13 (step S212).

The control section 14 then determines whether a non-transmission time $\beta$ ($> \alpha$) has been detected (step S213). If the non-transmission time $\beta$ has not been detected, the control section 14 enters the wait state. If it is determined in step S213 that the non-transmission time β has been detected, the control section 14 instructs the transmitting/receiving section 11 and the packet processing section 12 to stop receiving and processing the Data packets (step S214). The control section 14 then causes a DelayAck packet to be sent (step S215). The procedure then goes to step S216.

If it is determined in step S211 that CF-Multipoll packet does not contain permission for DelayAck packet transmission, the control section 14 does not carry out any packet transmission. The procedure then goes to step S216.

In step S216, the control section 14 determines whether the CF-End packet has been received. If the CF-End packet has not been received, the procedure returns to step S204 for receiving the next CF-Multipoll packet. Thereafter, the same operation as mentioned above is repeated.

If it is determined in step S216 that the CF-End packet has been received, the control section 14 determines whether the operation should be continued (step S217). If it is determined that the operation should be continued, the procedure returns to step S201, and the control station 1 goes into random access mode. If it is determined in step S217 not to continue, the control station 1 stops the operation.

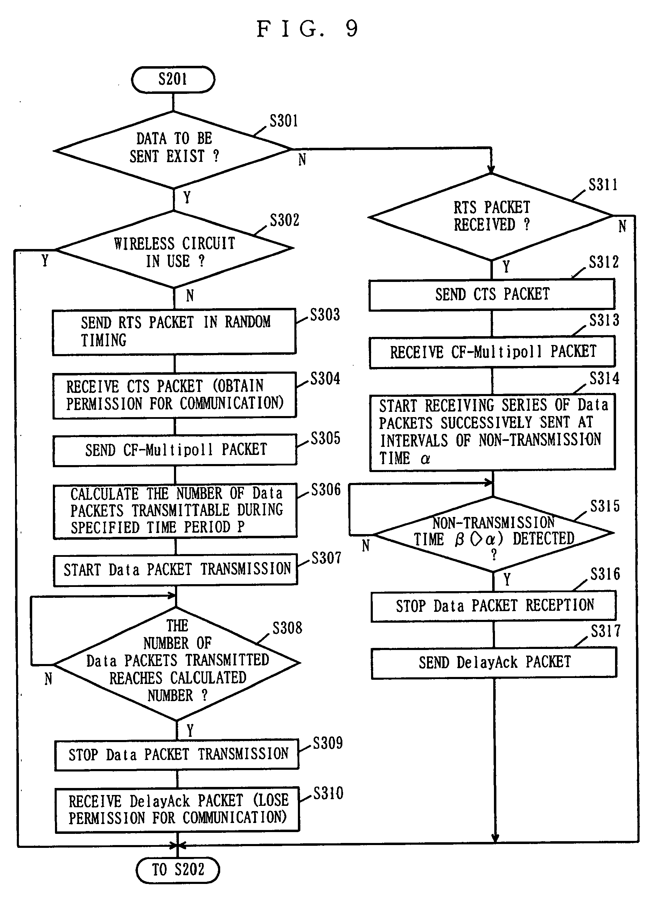

Described next is the operation of each of the wireless stations 1 to 4 (each control section 14) in random access mode. FIG. 9 is a flowchart showing the details of step S201 of FIG. 8. In FIG. 9, in random access mode, the control section 14 of each of the wireless stations 1 to 4 first determines whether any data to be sent exists (step S301). If no data exists, the procedure goes to step S311 (will be described later).

If it is determined in step S301 that any data exists, the control section 14 determines whether the wireless channel is in use (step S302). If the wireless channel is in use, the procedure goes to step S202.

If it is determined in step S302 that the wireless channel is not in use, the control section 14 sends an RTS packet in random timing (step S303). Here, the RTS packet is a packet to be sent from the wireless station desiring to send data (the wireless station 2, for example) to the wireless station for receiving the data (the wireless station 3, for example), the packet containing a destination (identifier of the data transmitting station) and permission for communications. The RTS packet is sent in random timing in order to avoid conflicts of RTS packets simultaneously coming from plural stations.

The control section 14 then receives a CTS packet (step S304). Here, the CTS packet is a packet to be sent in response to the RTS packet, containing a destination (identifier of the data transmitting station) and permission for communications. With the RTS packet and the CTS packet thus received and sent between the pair of wireless stations (the wireless stations 2 and 3, for example), the wireless stations in pair obtain permission for communications, and become the transmitting station and the receiving station.

Thereafter, in the wireless station that has now become the transmitting station (the wireless station 2, for example), the control section 14 sends a CF-Multipoll packet (step 305). The structure of the CF-Multipoll packet is exemplarily illustrated in FIG. 6 (refer to the above description of the operation of the control station 1).

The control station 14 then calculates the number of Data packets transmittable in the time period P1 (step S306). After the time α has passed since the CF-Multipoll packet was sent, the control section 14 instructs the packet processing section 12 and the packet transmitting/receiving section 11 to packet the data stored in the storage section 13 into Data packets and send them at intervals of the time α (step S307).

The control section 14 then determines whether the number of Data packets sent in response to the instruction in step S307 has reached the number calculated in step S306 (step S308). If the number of Data packets has not yet reached the calculated number, the control section 14 lets the packet processing section 12 and the packet transmitting/receiving section 11 continue to generate and send Data packets. If it is determined in step S308 that the number of Data packets has reached the calculated number, the control section 14 makes the packet processing section 12 and the packet transmitting/receiving section 11 stop generating and sending Data packets (step S309). The control section 14 then receives a DelayAck packet (step S310). Thereafter, the procedure goes to step S202 of FIG. 8.

If it is determined in step S301 that no data to be sent exists, the control section 14 first determines whether an RTS packet has been received (step S311). If no RTS packet has been received, the procedure goes to step S202 of FIG. 8.

If it is determined in step S311 that any RTS packet has been received, the control section 14 sends a CTS packet after the time period α has passed since the RTS packet was received (step S312). With the RTS packet and the CTS packet thus received and sent between the pair of wireless stations (the wireless stations 2 and 3, for example), the wireless stations in pair obtain permission for communications, and become the transmitting station and the receiving station.

On the other hand, in the wireless station that has now become the receiving station (the wireless station 3, for example), the control section 14 receives the CF-Multipoll packet (step S313). Then, the control section 14 instructs the transmitting/receiving section 11 and the packet processing section 12 to start receiving the series of Data packets coming at the time intervals α, extracting data from each packet, and storing the data in the storage section 13 (step S314).

The control section 14 then determines whether the non-transmission time β (> α) has been detected (step S315). If the non-transmission time β has not been detected, the control section 14 enters the wait state. If it is determined in step S315 that the non-transmission time β has been detected, the control section 14 stops Data packets reception (step S316), and then sends a DelayAck packet (step S317). The procedure then goes to step S202 of FIG. 8.

Specifically described below is an example of wireless communications carried out in the system of FIG. 1. As stated above, in the system of FIG. 1, the period that permits polling access and the period that permits random access alternately appear.

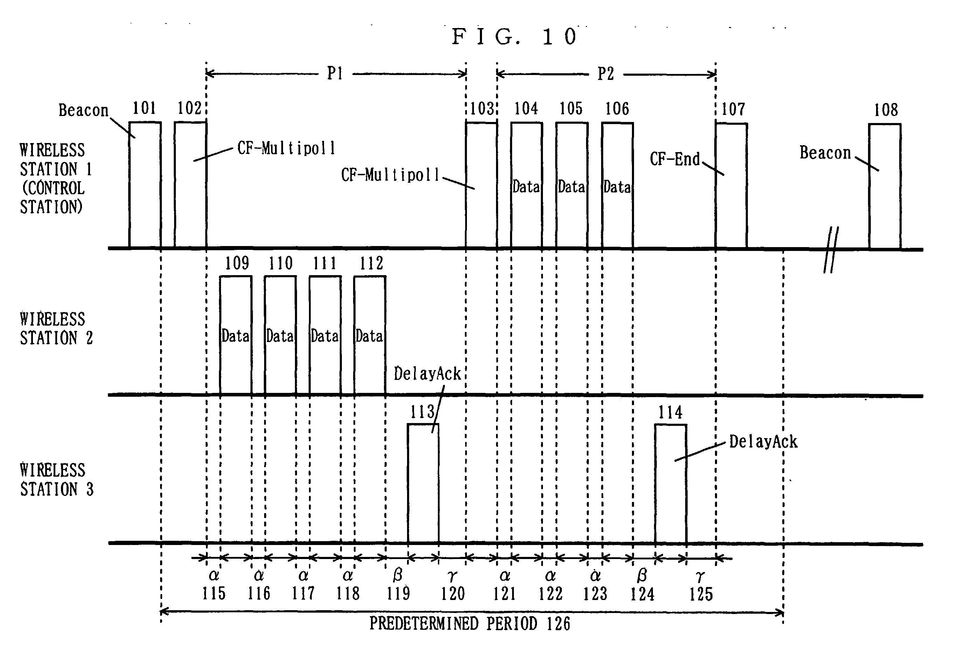

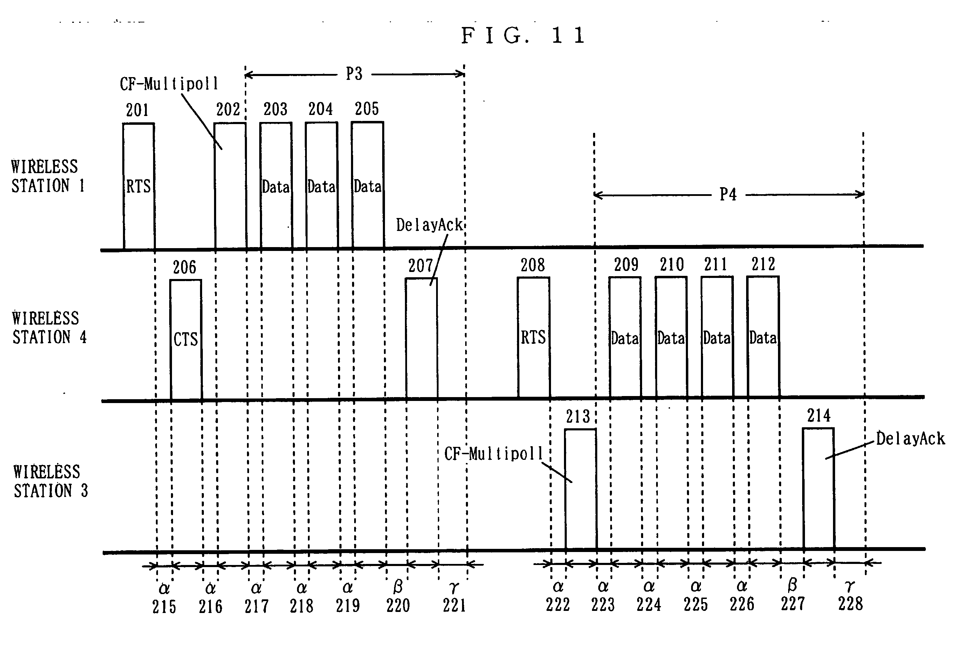

FIG. 10 is a timing chart showing an example of wireless communications carried out in the polling access period in the system of FIG. 1. FIG. 11 is a timing chart showing an example of wireless communications carried out in the random access period in the system of FIG. 1.

Described first is example wireless communications carried out in the polling access period. In FIG. 10, the control station 1 first sends Beacon101 (frame packet) for setting the polling access period. Thus, in a predetermined time period 126 starting from the time when Beacon101 was sent, only polling access is permitted. Then, from the polling list (FIG. 5), a pair with priority level 1 (the highest priority), that is, the wireless stations 2 and 3, is selected. Then, CF-Multipo11102 (report packet) indicating that the wireless station 2 is provided with permission for Data packet transmission and the wireless station 3 is provided with permission for DelayAck packet transmission.

The wireless station 2 obtains permission for Data packet transmission by receiving the CF-Multipo11102. The CF-Multipo11102 contains the communications allowable time period P1. Based on the time period P1, the length of time of each Data packet, the non-transmission time periods $\alpha$, $\beta$, and $\gamma$, and the length of time of the DelayAck packet, the wireless station 2 calculates the number of Data packets to be sent in the time period P1.

For example, assume that P1 = 1800$\mu$sec, the length of the Data packet = 340$\mu$sec, $\alpha$ = 15$\mu$sec, $\beta$= 25 $\mu$sec, $\gamma$ = 35 $\mu$sec, and the length of the DelayAck packet = 150 $\mu$sec. Under these assumptions, the number of Data packets M has to satisfy the following equation:

$$M*(15 + 340) + 25 + 150 + 35 < 1500.$$

The above equation is solved as M < 1590/355 (= 4.4 ...). Therefore, the number of Data packets transmittable in the specified time period P1 is four at maximum.

After a non-transmission period $\alpha$115, the wireless station 2 sends Data109 (data packet). Then, after a non-transmission period $\alpha$116, the wireless station 2 sends Data110. Similarly, the wireless station 2 sends Data111 and Data112 after non-transmission periods $\alpha$117 and $\alpha$118, respectively.

After having sent the calculated number (here, four) of Data packets 109 to 112, the wireless station 2 stops transmission, resultantly causing a non-transmission period $\beta$119 longer than the non-transmission period $\alpha$. At this moment, the wireless station 2 enters a state of waiting for a response packet from the receiving station (wireless station 3).

By detecting the non-transmission period $\beta$119, the wireless station 3 can know that the wireless station 2 has once completed Data packet transmission and then entered the wait state (that is, can detect the end of the series of the Data packets 109 to 112 sent after the CF-Multipo11102), and sends DelayAck113 (response packet). DelayAck 113 contains the reception results of the Data packets received before CF-Multipo11102 comes (not shown).

Based on the reception results contained in the received DelayAck113, the wireless station 2 can know whether any Data packet previously sent with permission should be re-sent due to error. Even if DelayAck113 is not successfully received, a DelayAck packet coming next also contains the reception results of the Data packets 109 to 112. Therefore, any Data packet that has failed to be received can be re-sent.

Then, when transmission of DelayAck113 causes no Data packet for transmission to be left in the wireless station 2, a non-transmission period $\gamma$120 longer than the non-transmission period $\beta$3119 occurs. At this moment, the wireless station 3 loses the permission for DelayAck packet transmission, the wireless station 2 loses the permission for Data packet transmission, and therefore the data transmission from the wireless station 2 to the wireless station 3 has been completed. If any Data packet to be transmitted is still left in the wireless station 2, it is possible to send the Data Packet after the non-transmission period $\beta$119 (or $\alpha$118) shorter than the non-transmission period $\gamma$120.

By detecting the non-transmission period y120, the control station 1 can know that the wireless station 2 has lost the permission for Deta packet transmission, and that the wireless station 3 has lost the permission for DelayAck packet transmission.

The control station 1 then checks to see whether the predetermined time period 126 still remains. If the period 126 remains, the control station 1 selects a pair having the next priority level 2 (the wireless stations 1 and 3) from the polling list (FIG. 5), and sends CF-Multipo11103 (report packet) indicating that the wireless station 1 (the control station itself) is provided with permission for Data packet transmission and the wireless station 3 is provided with DelayAck packet transmission. The CF-Multipo11103 contains a communications allowable time period P2.

Provided with the permission for Data packet transmission, the control station 1 calculates the number of Data packets transmittable in the specified time period P2 (assume herein that the number is three). After a non-transmission period $\alpha$121, the control station 1 sends a data packet (Data104), and after a non-transmission period $\alpha$122, the control

station 1 sends Data105. Similarly, the control station 1 sends Data106 after a non-transmission period α123.

After having sent the calculated number (here, three) of Data packets 104 to 106, the control station 1 stops transmission, causing a non-transmission period β124 longer than the non-transmission period α. At this moment, the control station 1 enters a state for waiting for a response packet from the receiving station (wireless station 3).

By detecting the non-transmission period β124, the wireless station 3 can know that the control station 1 has once completed Data packet transmission and then entered the wait state (that is, can detect the end of the series of Data packets 104 to 106 sent after CF-Multipoll103), and then sends a response packet (DelayAck114). DelayAck114 contains the reception results of Data packets received before CF-Multipo11103 comes.

Based on the reception results contained in the received DelayAck114, the control station 1 can know whether any Data packet previously sent to the wireless station 3 with permission should be re-sent due to error. Even if DelayAck114 is not successfully received, a DelayAck packet coming next also contains the reception results of the Data packets 104 to 106. Therefore, any Data packet that has failed to be received can be re-sent.

Then, when transmission of DelayAck114 causes no Data packet for transmission to be left in the control station 1, a non-transmission period γ125 longer than the non-transmission period β124 occurs. At this moment, the wireless station 3 loses the permission for DelayAck packet transmission, the control station 1 loses the permission for Data packet transmission, and therefore the data transmission from the control station 1 to the wireless station 3 has been completed. If any Data packet to be transmitted is still left in the control station 1, it is possible to send the Data Packet after the non-transmission period β124 (or α123) shorter than the non-transmission period γ125.

Then, transmission of DelayAck114 causes a non-transmission period y125 longer than the non-transmission period β124. At this moment, the wireless station 3 loses the permission for DalayAck packet transmission.

By detecting the non-transmission period y125, the control station 1 can know that the wireless station 3 has lost the permission for DelayAck packet transmission.

The control station 1 then checks to see whether the predetermined time period 126 still remains. If the period 126 remains, the control station 1 selects a pair having the next priority level 3 from the polling list (FIG. 5), and sends a new report packet. In the present example, however, the period 126 is running short, and therefore the control station 1 sends CF-End107, which is a polling-access end packet for forcefully terminating polling access, thereby reporting to each of the wireless stations 2 to 4 that polling access is suspended.

Thereafter, a random access period is set until Beacon 108 comes next. After Beacon 108, the same process as described above is carried out. When Beacon 108 sets a new polling access period, however, the pair having priority level 1 is first selected again for permission, irrespectively of which is the last pair permitted in the previous polling access period. Alternatively, if the pair having priority level 3 has been provided with permission for communications in the previous polling access period, for example, the pair having priority level 4 may be provided with permission for communications in the next polling access period.

With reference to FIG. 11, described next is wireless communications carried out in the random access period. FIG. 11 illustrates a case where data transmission is made from the wireless station 1 to the wireless station 4, and then from the wireless station 4 to the wireless station 3. In FIG. 11, the wireless station 1 checks to see whether the wireless channel is in use. If not in use, the wireless station 1 sends RTS (request to send) 201, which is a packet for requesting transmission at a random time interval, to the wireless station 4.

On receiving RTS201, the wireless station 4 sends CTS (clear to send) 206, which is a packet for permitting transmission, at an interval of a non-transmission period α215, thereby reporting to the wireless station 1 that data transmission is permitted.

On receiving CTS206 and before starting data transmission, the wireless station 1 calculates the number of Data packets transmittable in a time period P3. This calculation is made based on the communications allowable time period P3, the length of time of each Data packet, the non-transmission times α, β, and γ, and the length of time of the DelayAck packet. Furthermore, this calculation is similar to that made in the polling access period. Assume herein that the calculated number of Data packets is three.

The wireless station 1 then sends CF-Multipoll202, which is a packet for reporting that the wireless station 1 is provided with permission for Data packet transmission and the wireless station 4 is provided with permission for DelayAck packet transmission, at an interval of a non-transmission period α216. If CTS602 cannot be received, the wireless station 1 re-sends the RTS 201 to the wireless station 4.

On sending CF-Multipo11202, the wireless station 1 obtains permission for Data packet transmission. On receiving CF-Multipo11202, the wireless station 4 obtains permission for DelayAck packet transmission.

The wireless station 1 then successively sends the calculated number (here, three) of the Data packets 203 to 205 at intervals of non-transmission periods α217 to α219, respectively. After these three Data packets 203 to 205 have thus been sent, the wireless station 1 stops transmission, thereby causing a non-transmission period β220 longer than the non-transmission period α219. At this moment, the wireless station 1 enters a state of waiting a response packet from the receiving station (wireless station 4).

By detecting the non-transmission period β220, the wireless station 4 can know that the wireless station 1 has once completed Data packet transmission and then entered the wait state, and then sends a response packet (DelayAck207). DelayAck207 contains the reception results of Data packets received before CF-Multipoll 202 comes (not shown).

Based on the reception results contained in the received DelayAck207, the wireless station 1 can know whether any Data packet previously sent with permission should be re-sent due to error. Even if DelayAck207 is not been successfully received, a DelayAck packet coming next also contains the reception results of the Data packets 203 to 205. Therefore, any Data packet that has failed to be received can be re-sent.

Then, when transmission of DelayAck207 causes no Data packet for transmission to be left in the wireless station 1, a non-transmission period $\gamma221$ longer than the non-transmission period $\beta220$ occurs. At this moment, the wireless station 4 loses the permission for DelayAck packet transmission, the wireless station 1 loses the permission for Data packet transmission, and therefore the data transmission from the wireless station 1 to the wireless station 4 has been completed. If any Data packet to be transmitted is still left in the wireless station 1, it is possible to send the Data Packet after the non-transmission period $\beta220$ (or $\alpha219$) shorter than the non-transmission period $\gamma221$.

Then, transmission of DelayAck207 causes a non-transmission period $\gamma221$ longer than the non-transmission period $\beta124$. At this moment, the wireless station 4 loses the permission for DelayAck packet transmission, and therefore data transmission from the wireless station 1 to the wireless station 4 has been completed.

When no hidden terminals (terminals that are within the network system but cannot be located by one wireless station because they are out of the reach of radio waves) exist, exchanges of RTS and CTS can be omitted.

Even if any hidden terminal exists, CTS can be omitted by commonly using CTS and CF-Multipoll. Here, in data transmission from the wireless station 4 to the wireless station 3 carried out after data transmission has been completed from the wireless station 1 to the wireless station 4, CTS is omitted.

The wireless station 4 desiring to send data to the wireless station 3 first checks to see whether the wireless channel is in use. If not in use, the wireless station 4 sends RTS (request to send) 208, which is a packet for requesting transmission at a random interval, to the wireless station 3.

On receiving RTS208, the wireless station 3 sends CF-MUltipo11213, which is a packet for reporting that the wireless station 4 is permitted to send Data packets and the wireless station 3 itself is permitted to send a DelayAck packet in a non-transmission period $\alpha222$. CF-Multipoll213 contains a communications allowable time period P4.

On receiving CF-MUltipo11213 and before starting data transmission, the wireless station 4 calculates the number of Data packets to be sent in the time period P4. This calculation is made based on the communications allowable time period P4, the length of time of each Data packet, non-transmission times $\alpha$, $\beta$, and $\gamma$, and the length of time of the DelayAck packet. Furthermore, this calculation is similar to that carried out in the polling access period. Assume herein that the calculated number of Data packet is four.

Note that, if the wireless station 4 has failed to receive CF-Multipo11213, transmission request is made again.

The wireless station 4 then successively sends the calculated number (here, four) of Data packets 209 to 212 at intervals $\alpha223$ to $\alpha226$, respectively. After having sent these four Data packets 209 to 212, the wireless station 4 stops transmission, thereby causing a non-transmission period $\beta227$ longer than the non-transmission period $\alpha226$. At this moment, the wireless station 4 enters a state of waiting a response packet from the receiving station (wireless station 3).

By detecting the non-transmission period $\beta227$, the wireless station 3 can know that the wireless station 4 has once completed Data packet transmission and entered the wait state, and sends a response packet (DelayAck214). DelayAck214 contains the reception results of Data packets previously received before the time when CF-Multipo11213 was received.

Based on the reception results contained in the received DelayAck214, the wireless station 4 can know any Data packet that should be re-sent due to error at the previous transmission with permission. Even if DelayAck214 has not been successfully received, a DelayAck packet coming next also contains the reception results of the Data packets 209 to 212. Therefore, any Data packet that has failed to be received can be re-sent.

Then, transmission of DelayAck214 causes a non-transmission period $\gamma228$ longer than the non-transmission period $\beta227$. At this moment, the wireless station 3 loses permission for DelayAck packet transmission, and data transmission from the wireless station 4 to the wireless station 3 has been completed.

Then, when transmission of DelayAck214 causes no Data packet for transmission to be left in the wireless station 4, a non-transmission period $\gamma228$ longer than the non-transmission period $\beta227$ occurs. At this moment, the wireless station 3 loses the permission for DelayAck packet transmission, the wireless station 4 loses the permission for Data packet transmission, and therefore the data transmission from the wireless station 4 to the wireless station 3 has been completed. If any Data packet to be transmitted is still left in the wireless station 3, it is possible to send the Data Packet after the non-transmission period $\beta227$ (or $\alpha226$) shorter than the non-transmission period $\gamma228$.

As such, in the present embodiment, the polling access period and the random access period alternately appear during communications. During the polling access period, any one of the wireless stations (here, the wireless station 1) serves as the control station, selecting a pair of stations (the wireless stations 2 and 3, for example) as the transmitting station and the receiving station, and permitting them to communicate with each other within the specified time period P. During the random access period, on the other hand, any station to send or receive data (the wireless stations 1 and 4, for example) determines whether the wireless channel is in use. If not in use, these stations are provided with permission to communicate with each other in the specified time period P, thereby serving as the transmitting station and the receiving station.

In either access period, the transmitting station successively sends a series of data packets in the specified time period P. On receiving the series of data packets, the receiving station sends a response packet. Thus, compared with a case where a response packet is sent for every data packet received, the number of response packets sent per unit time can be reduced. This reduction can increase the number of data packets to be sent, and therefore can achieve higher transmission efficiency.

Also, in the present embodiment, in the polling access period, if the pair of stations provided with permission for communications with each other has completed communications before the specified time period P passes, the control station 1 forcefully terminates the permission for communications. Therefore, the next pair of stations can be moved up for permission for starting communications. This makes data transfer more efficient. During the random access period, on the other hand, if the transmitting station and the receiving station have completed communications before the specified time period P passes, the permission provided to these stations for communications is forcefully terminated. Thus, other transmitting station and receiving station can be moved up for permission for starting communications. This makes data transfer more efficient.

(Second embodiment)

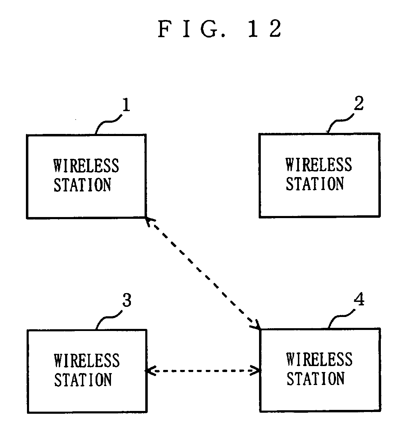

FIG. 12 is a block diagram illustrating the configuration of a wireless communications system according to a second embodiment of the present invention. In FIG. 12, the wireless communications system is configured by four wireless stations 1 to 4 that wirelessly communicate with one another.

In the first embodiment, the polling access period and the random access period alternately appear. During the polling access period, the wireless station 1 exemplarily serves as the control station, controlling communications among the wireless stations. During the random access period, each wireless station obtains permission for communications. In the second embodiment, on the other hand, no polling access period is set, and therefore random access is always possible. Random access carried out in the second embodiment is similar to that in the first embodiment.

Each of the wireless stations 1 to 4 in FIG. 12 is similar in construction and operation to each of the wireless station 1 to 4 in FIG. 1 (refer to FIG. 2 and (b) of FIG. 3, and the description in the first embodiment).

The operation of each of the wireless stations 1 to 4 in FIG. 12 is similar to the operation carried out by each of the wireless stations 1 to 4 of FIG. 1 in random access mode (refer to the flowchart of FIG. 9). A specific example of wireless communications carried out in the system of FIG. 12 is similar to that carried out in the random access period in the first embodiment (refer to the timing chart of FIG. 11).

As stated above, in the present embodiment, random access is always possible. In such a case, high transmission efficiency can be achieved.

In the first and second embodiments, the transmitting station successively sends Data packets at intervals of the time period $\alpha$. Having sent the calculated number of Data packets, the transmitting station temporarily stops sending packet transmission. When the next Data packet does not come after the time $\beta$ ($> \alpha$) has passed since the last Data Packet was received, the receiving station determines that Data transmission has been once completed, and then sends a DelayAck packet.

In third and fourth embodiments described below, the transmitting station also successively sends Data packets at intervals of the time period $\alpha$. Having sent the calculated number of Data packets, the transmitting station sends AckReq after the time period $\alpha$ for temporarily stopping packet transmission. On receiving the AckReq packet, the receiving station determines that Data transmission has been once completed, and then sends a DelayAck packet.

In other words, the third and fourth embodiments are similar to the first and second ones except for the process for detecting the end of the series of Data packets coming from one wireless station.

(Third embodiment)

The configuration of a wireless communications system according to the third embodiment of the present invention is similar to that according to the first embodiment, and therefore FIG. 1 is also referred to for description below. In FIG. 1, the wireless communications system is configured by four wireless stations 1 to 4 that communicate with each other. The wireless station 1 serves as the control station for controlling communications among the wireless stations 1 to 4.

The construction of each of the wireless stations 1 to 4 is similar to that in the first embodiment, and therefore FIGS. 2 and 3 are referred to for description. Each component illustrated in FIGS. 2 and 3 operates similarly to the first embodiment. However, the control program for the wireless station (refer to FIG. 3(b)) is partly different from that in the first embodiment. As a result, how to detect the end of the series of Data packets is different from that in the first embodiment (other operations are the same as those in the first embodiment).

The process carried out by the control station 1 (the control section 14) is similar to that in the first embodiment (refer to the flowchart of FIG. 4), and therefore is not described herein.

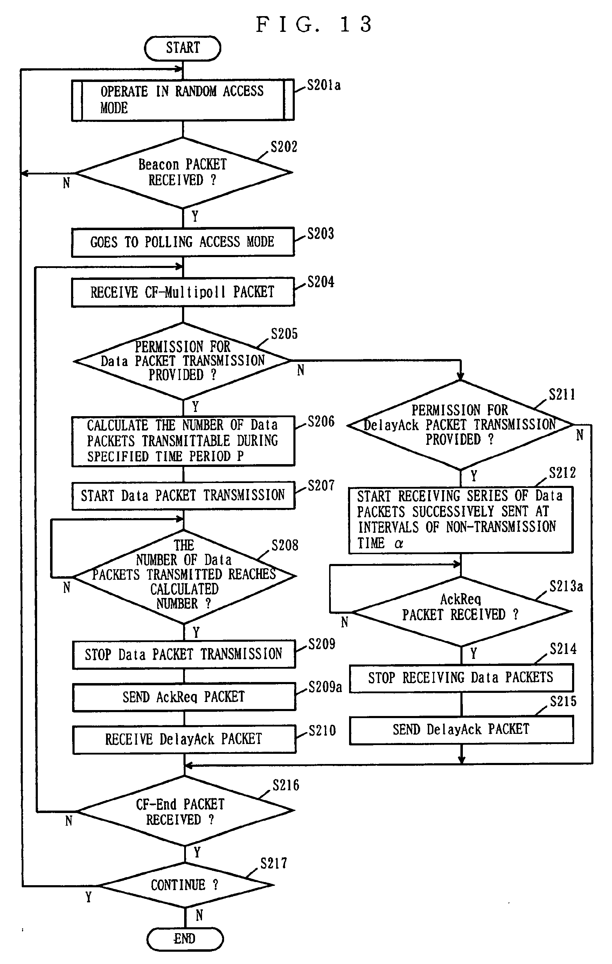

Described is the operation of each of the wireless stations 1 to 4. FIG. 13 is a flowchart showing the communications process carried out by each of the wireless stations 1 to 4 (the control section 14) of FIG. 1. In FIG. 13, when each of the wireless stations 1 to 4 is activated, the control section 14 first operates in random access mode (step S201a). The operation in random access mode will be described later.

The following processes in steps S202 through S209 are the same as those in the first embodiment (refer to FIG. 8), and therefore are not described herein. In step S209, after stopping generation and transmission of Data packets, the control section 14 sends an AckReq packet after the non-transmission period $\alpha$ (step S209a). The control section 14 then receives a DelayAck packet (step S210) . Thereafter, the procedure goes to step S216.

Here, the AckReq packet is a packet sent to the receiving station from the transmitting station that has once completed transmission of the series of Data packets and entered the wait state for requesting a response. The AckReq packet has an identifier of the receiving station and a response request.

The following processes in step S211 and S212 are similar to those in the first embodiment, and therefore are not described herein. After the series of Data packets are started to be received in step S212, the control section 14 determines whether an AckReq packet has been received (step S213a). If not received, the control section 14 enters the wait state. If received, the control section 14 instructs the transmitting/receiving section 11 and the packet processing section 12 to stop receiving and processing Data packets (step S214), and then causes a DelayAck packet to be sent (step S215). The procedure then goes to step S216.

The following processes in steps S216 and S217 are similar to those in the first embodiment, and therefore are not described herein.

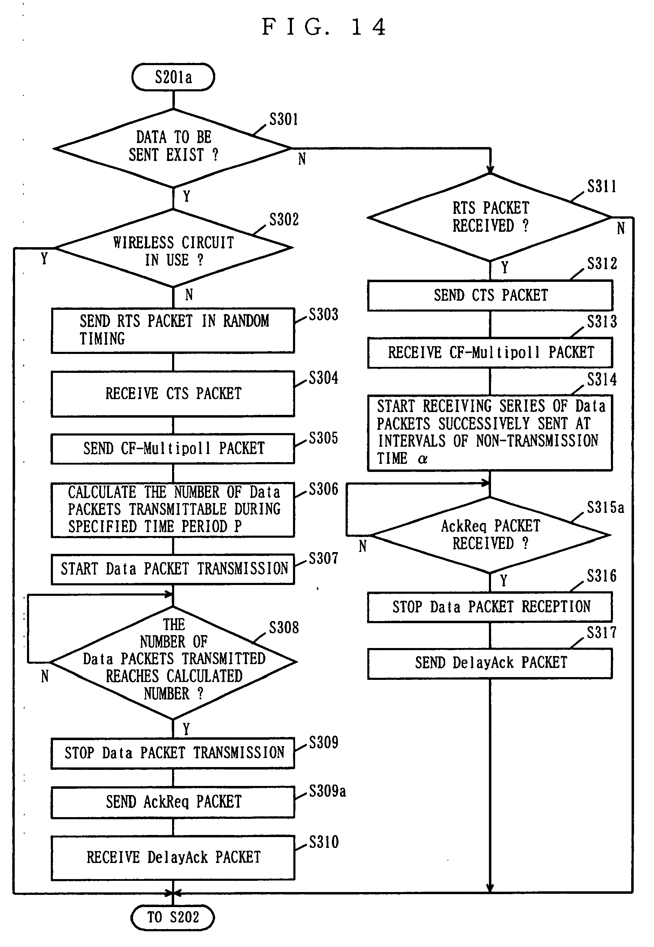

Described next is the above step S201a, that is, the operation carried out by each of the wireless stations 1 to 4 in random access mode. FIG. 14 is a flowchart showing the details of step S201a of FIG. 13. In FIG. 14, the processes in steps S301 to S309 are similar in those in the first embodiment (refer to the flowchart of FIG. 9), and therefore are not described herein.

After stopping transmission and generation of Data packets in step S309 , the control section 14 sends an AckReq packet (step S309a). The following process in steps S310 through S314 are similar to those in the first embodiment, and therefore are not described herein. After the series of Data packets are started to be received in step S314, the control section 14 determines whether an AckReq packet has been received (step S315a). If not received, the control section 14 enters the wait state.

If it is determined in step S315a that an AckReq packet has been received, the control section 14 stops receiving Data packets (step S316), and then sends a DelayAck packet (step S317). The procedure goes to step S202 of FIG. 13.

Described specifically below is an example of wireless communications carried out in the system of FIG. 1. As stated above, in the system of FIG. 1, the period in which polling access is permitted and the period in which random access is permitted alternately appear.

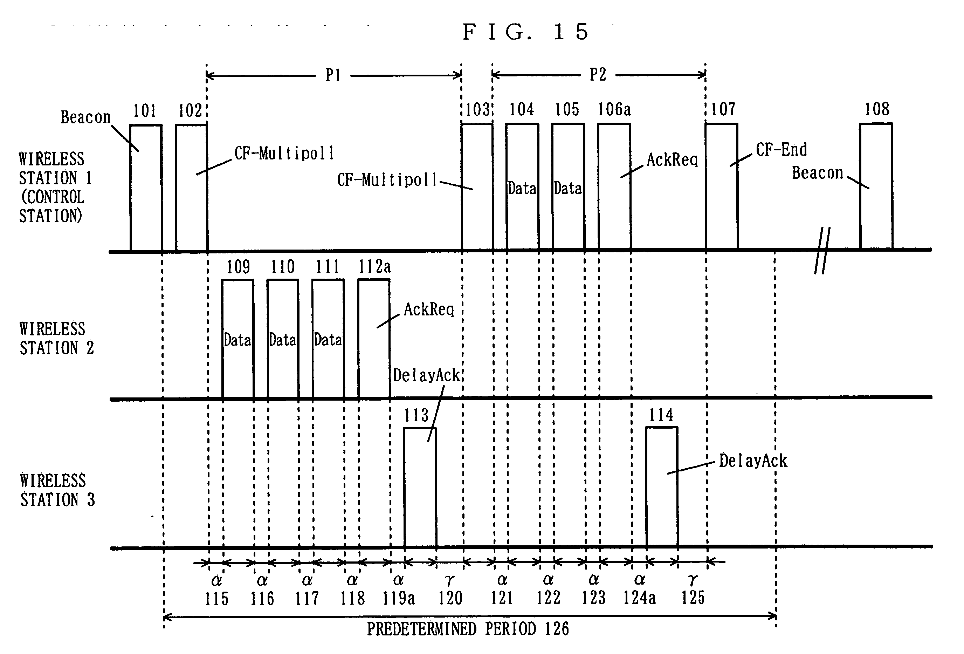

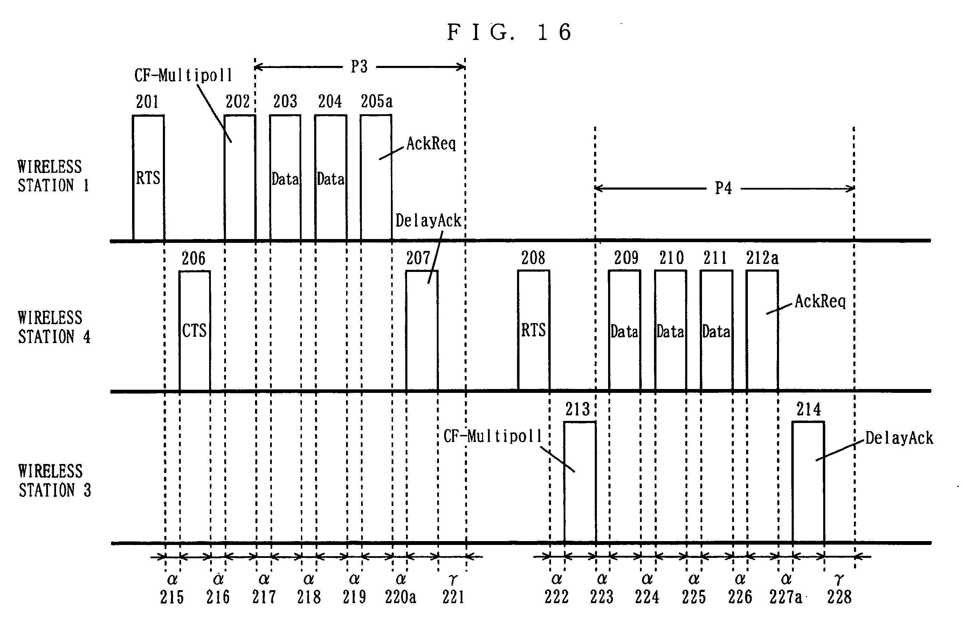

FIG. 15 is a timing chart showing an example of wireless communications carried out in the system of FIG. 1 in the polling access period. FIG. 16 is a timing chart showing an example of wireless communications carried out in the system of FIG. 1 in the random access period.

With reference to FIG. 15, described first is the example of wireless communications carried out in the polling access period. In FIG. 15, the control station 1 sends Beacon101 (frame packet) for setting the polling access period. Thus, only polling access is permitted for a predetermined period 126 since the time when Beacon 101 is sent. The control station 1 then selects, from the polling list (FIG. 5), a pair having priority 1 (highest priority), the wireless stations 2 and 3, for example. The control station 1 then sends a CF-Multipo11102 (report packet) indicating that the wireless station 2 is permitted to send Data packets and the wireless station 3 is permitted to send a DelayAck packet.

By receiving the CF-Multipo11102, the wireless station 2 obtains permission to send Data packets. The CF-Multipo11102 contains a communication allowable time period P1. Based on the time period P1, the length of time of each Data packet, non-transmission times $\alpha$ and $\gamma$, the length of time of the AckReq packet, and the length of time of the DelayAck packet, the wireless station 2 calculates the number of Data packets transmittable in the time period P1.

For example, assume that P1 = 1800$\mu$sec, the length of the Data packet = 340$\mu$sec, $\alpha$ = 15$\mu$sec, $\gamma$ = 35 $\mu$sec, the length of AckReq packet = 150$\mu$sec, and the length of the DelayAck packet = 200 $\mu$sec. Under these assumptions, the number of Data packets M has to satisfy the following equation:

```
M*(15 + 340) + (15 + 200) + (15 + 150) + 35 < 1800.
```

The above equation is solved as M < 1385/355 (= 3.9 ...). Therefore, the number of Data packets transmittable in the specified time period P1 is three at maximum.

The wireless station 2 sends Data109 (data packet) after a non-transmission period $\alpha$115, and then sends Data110 after a non-transmission period a116. Similarly, the wireless station 2 sends Data111 after the non-transmission period $\alpha$117.

After having sent the calculated number (here, three) of Data packets 109 to 111, the wireless station 2 sends an AckReq112a (response request packet) after the non-transmission time $\alpha$. At this moment, the wireless station 2 enters a state of waiting for a response packet from the receiving station (wireless station 3).

By receiving AckReq112a, the wireless station 3 can know that the wireless station 2 has once completed Data packet transmission and entered the wait state (that is, can detect the end of the series of Data packets 109 to 111 sent after CF-Multipo11102). The wireless station 3 then sends DelayAck113 (response packet). DelayAck113 contains the reception results of Data packets (not shown) received before CF-Multipo11112 was received.

Based on the reception results contained in DelayAck113, the wireless station 2 can know any Data packet that should be re-sent due to error at the previous transmission with permission. Even if DelayAck113 has not been successfully received, a DelayAck packet coming next also contains the reception results of the Data packets 109 to 111. Therefore, the wireless station 2 can re-send any Data packet that has failed to be received.

Then, when transmission of DelayAck113 causes no Data packet for transmission to be left in the wireless station 2, a non-transmission period $\gamma$120 longer than the non-transmission period $\alpha$119a occurs. At this moment, the wireless station 3 loses the permission for DelayAck packet transmission, the wireless station 2 loses the permission for Data packet transmission, and therefore the data transmission from the wireless station 2 to the wireless station 3 has been completed. If any Data packet to be transmitted is still left in the wireless station 2, it is possible to send the Data Packet after the non-transmission period $\alpha$119a shorter than the non-transmission period $\gamma$120.

The control station 1 detects the non-transmission period $\gamma$120 to know that the wireless station 2 has lost the permission for Data packet transmission and that the wireless station 3 has lost the permission for DelayAck packet transmission.

The control station 1 then checks to see whether the predetermined time period 126 still remains. If the period 126 remains, the control station 1 selects a pair having the next priority 2 (the wireless stations 1 and 3) from the polling list (FIG. 5), and sends CF-Multipo11103 (report packet) indicating that the wireless station 1 (the control station itself) is permitted to transmit Data packets and the wireless station 3 is permitted to transmit a DelayAck packet. The CF-Multipo11103 has a communications allowable time period P2 described therein.

When obtaining permission to send Data packets, the control station 1 calculates the number of Data packets to be transmitted in the specified time period P2 (assume herein that the calculated number is two). Then, after the non-transmission period $\alpha$121, the control station 1 sends a data packet (Data104) after the non-transmission period $\alpha$121, and after the non-transmission period $\alpha$122, sends Data105.

After having sent the calculated number (here, two) of Data packets 104 and 105, the control station 1 sends an AckReq packet 106a after the time $\alpha$123. At this moment, the wireless station 1 enters a state of waiting for a response packet from the receiving station (wireless station 3).

By detecting AckReq packet 106a, the wireless station 3 can know that the control station 1 has once completed Data packet transmission and entered the wait state (that is, can detect the end of the series of Data packets 104 and 105 after CF-Multipolll03), and sends DelayAck114 (response packet) after the non-transmission period $\alpha$124a. DelayAck114 contains the reception results of the series of Data packets received before CF-Multipo11103.

Based on the reception results contained in DelayAck114, the control station 1 can know any Data packet that should be re-sent to the wireless station 3 due to error at the previous transmission with permission. Even if DelayAck114 has not been successfully received, a DelayAck packet coming next also contains the reception results of the Data packets 104 and 105. Therefore, the control station 1 can re-send any Data packet that has failed to be received.

Then, when transmission of DelayAck114 causes no Data packet for transmission to be left in the control station 1, a non-transmission period $\gamma$125 longer than the non-transmission period $\alpha$124a occurs. At this moment, the wireless station 3 loses the permission for DelayAck packet transmission, the control station 1 loses the permission for Data packet transmission, and therefore the data transmission from the control station 1 to the wireless station 3 has been completed. If any Data packet to be transmitted is still left in the control station 1, it is possible to send the Data Packet after the non-transmission period $\alpha$124a shorter than the non-transmission period $\gamma$125.

The control station 1 detects the non-transmission period $\gamma$125 to know that the wireless station 3 has lost the permission for DelayAck packet transmission.

The control station 1 then checks to see whether the predetermined time period 126 still remains. If the period 126 remains, the control station 1 selects a pair having the next priority 3 from the polling list (FIG. 5), and sends a new report packet (CF-Multipoll). In the present example, however, the period 126 is running short, and therefore the control station 1 sends CF-End107, which is a polling-access end packet for forcefully terminating polling access, thereby reporting to each of the wireless stations 2 to 4 that polling access is suspended.

Thereafter, a random access period is set until Beacon 108 comes next. After Beacon 108, the same process as described above is carried out. When Beacon 108 sets a new polling access period, however, the pair having priority 1 is selected again first for permission irrespectively of which is the last pair permitted in the previous polling access period. Alternatively, if the pair having priority 3 has been provided with permission for communications in the previous polling access period, for example, the pair having priority 4 may be provided with permission for communications in the next polling access period.

With reference to FIG. 16, described next is wireless communications carried out in the random access period. FIG. 16 illustrates a case where data transmission is made from the wireless station 1 to the wireless station 4, and from the wireless station 4 to the wireless station 3. In FIG. 16, the wireless station 1 checks to see whether the wireless channel is in use. If not in use, the wireless station 1 sends RTS (request to send) 201, which is a packet for requesting transmission at random time intervals, to the wireless station 4.

On receiving RTS201, the wireless station 4 sends CTS (clear to send) 206, which is a packet for permitting transmission at an interval of a non-transmission period $\alpha$215, thereby reporting to the wireless station 1 that data transmission is permitted.

On receiving CTS206 and before starting data transmission, the wireless station 1 calculates the number of Data packets transmittable in the time period P3. This calculation is made based on the communications allowable time period P3, the length of time of each Data packet, the non-transmission time $\alpha$, $\beta$, and $\gamma$, and the length of time of the DelayAck packet. Furthermore, this calculation is similar to that made in the polling access period. Assume herein that the calculated number of Data packets is two.

The wireless station 1 then sends CF-Multipoll202, which is a packet for reporting that the wireless station 1 itself is permitted to send Data packets and the wireless station 4 is permitted to send a DelayAck packet, at an interval of a non-transmission period a216. If CTS602 cannot be received, the wireless station 1 re-sends the RTS 201.

On sending CF-Multipoll202, the wireless station 1 obtains permission for Data packet transmission. On receiving CF-Multipo11202, the wireless station 4 obtains permission for DelayAck packet transmission.

The wireless station 1 then successively sends the calculated number (here, two) of the Data packets 203 and 204 at intervals of non-transmission periods $\alpha$217 and $\alpha$219, respectively. After these two Data packets 203 and 204 have thus been sent, the wireless station 1 sends an AckReq packet 205a at an interval of the time $\alpha$, thereby stopping transmission. At this moment, the wireless station 1 enters a state of waiting for a response packet from the receiving station (wireless station 4).

By detecting the AckReq packet 205a, the wireless station 4 can know that the wireless station 1 has once completed Data packet transmission and entered the wait state, and then sends DelayAck207 (a response packet). DelayAck207 contains the reception results of Data packets (not shown) received before the time when CF-Multipoll 202 is received.

Based on the reception results contained in the received DelayAck207, the wireless station 1 can know any Data packet that should be re-sent due to error at the previous transmission with permission. Even if DelayAck207 has not been successfully received, a DelayAck packet coming next also contains the reception results of the Data packets 203 and 204. Therefore, the wireless station 2 can re-send any Data packet that has failed to be received.

Then, when transmission of DelayAck207 causes no Data packet for transmission to be left in the wireless station 1, a non-transmission period $\gamma$221 longer than the non-transmission period $\alpha$220a occurs. At this moment, the wireless station 4 loses the permission for DelayAck packet transmission, the wireless station 1 loses the permission for Data packet transmission, and therefore the data transmission from the control station 1 to the wireless station 4 has been completed. If any Data packet to be transmitted is still left in the control station 1, it is possible to send the Data Packet during the non-transmission period $\alpha$220a shorter than the non-transmission period $\gamma$221.

When no hidden terminals (terminals that are within the network system but cannot be located by one wireless station because they are out of the reach of radio waves) exist, exchanges of RTS and CTS can be omitted.

Even if any hidden terminal exists, CTS can be omitted by commonly using CTS and CF-Multipoll. Here, in data transmission from the wireless station 4 to the wireless station 3 carried out after data transmission has been completed from the wireless station 1 to the wireless station 4, CTS is omitted.

The wireless station 4 desiring to send data to the wireless station 3 first checks to see whether the wireless channel is in use. If not in use, the wireless station 4 sends RTS (request to send) 208, which is a packet for requesting transmission at a random interval, to the wireless station 3.

On receiving RTS208, the wireless station 3 sends CF-MUltipoll213, which is a packet for reporting that the wireless station 4 is permitted to send Data packets and the wireless station 3 itself is permitted to send a DelayAck packet within a non-transmission period $\alpha$222. CF-Multipoll213 contains a communications allowable time period P4.

On receiving CF-MUltipo11213 and before starting data transmission, the wireless station 4 calculates the number of Data packets transmittable in the time period P4. This calculation is made based on the communications allowable time period P4, the length of time of each Data packet, non-transmission times $\alpha$, $\beta$, and $\gamma$, and the length of time of the DelayAck packet. Furthermore, this calculation is similar to that carried out in the polling access period.

Assume herein that the calculated number of Data packet is three.

Note that, if the wireless station 4 has failed to receive CF-Multipoll213, transmission request is made again.

The wireless station 4 then successively sends the calculated number (here, three) of Data packets 209 to 211 at intervals α223 to α225, respectively. After having sent these three Data packets 209 to 211, the wireless station 4 sends an AckReq packet 212a at the interval of the time α, thereby stopping transmission. At this moment, the wireless station 4 enters a state of waiting for a response packet from the receiving station (wireless station 3).

By detecting the AckReq packet 212a, the wireless station 3 can know that the wireless station 4 has once completed Data packet transmission and entered the wait state, and sends DelayAck214 (a response packet). DelayAck214 contains the reception results of Data packets previously received before the time when CF-Multipoll213 was received (not shown).

Based on the reception results contained in the received DelayAck214, the wireless station 4 can know any Data packet that should be re-sent due to error at the previous transmission with permission. Even if DelayAck214 has not been successfully received, a DelayAck packet coming next also contains the reception results of the Data packets 209 to 211. Therefore, the wireless station 4 can re-send any Data packet that has failed to be received.

Then, when transmission of DelayAck214 causes no Data packet for transmission to be left in the wireless station 4, a non-transmission period γ228 longer than the non-transmission period α227a occurs. At this moment, the wireless station 4 loses the permission for DelayAck packet transmission, the wireless station 4 loses the permission for Data packet transmission, and therefore the data transmission from the control station 1 to the wireless station 4 has been completed. If any Data packet to be transmitted is still left in the wireless station 4, it is possible to send the Data Packet during the non-transmission period α227a shorter than the non-transmission period γ228.

Note that, in the present embodiment, the transmitting station sends an AckReq packet after completing transmission of the series of Data packets. Alternatively, an empty packet may be sent in stead of the AckReq packet. Furthermore, any packet may be sent for detecting the end of the series of Data packets as long as the packet is distinguishable from Data packets or other control packets.

As such, according to the present embodiment, effects similar to those described in the first embodiment can be obtained.

In the first embodiment, the receiving station determines, based on detection of the non-transmission time β longer than the non-transmission time α, that reception of the series of data packets has been completed. In the third embodiment, on the other hand, the transmitting station sends a series of data packets and then a response request packet. On receiving the response request packet, the receiving station determines that reception of the series of data packets has been completed, and then sends a response packet.

If completion of receiving the series of data packets is detected based on the non-transmission period as in the first embodiment, more data packets are transmittable, and therefore higher transmission efficiency can be achieved, compared with a case where such completion is detected based on the response request packet as in the third embodiment.

**Claims**

1. A communications method for carrying out communications among plural stations (1-4) by using a single wireless channel which is shared by the plural stations in a time-division manner, wherein
any one of the plural stations serves as a control station (1), for controlling the communications among the plural stations, and the method includes:

   a step (S104), carried out by the control station, of selecting a pair of stations from the plural stations as a transmitting station (2) and a receiving station (3), and providing the pair of stations with permission for the communications using the wireless channel in a specified time period P;
   a step (S206), carried out by the transmitting station, of calculating the number of data packets transmittable in the specified time period P;
   a step (S207 through S209), carried out by the transmitting station, of successively sending to the receiving station a series of data packets (109-112) not more than the calculated number of data packets;
   a step (S212), carried out by the receiving station, of starting reception of the series of data packets coming from the transmitting station;
   a step (S215), carried out by the receiving station, of sending a response packet (113) to the transmitting station when completing the reception of the series of data packets; and
   a step (S107), carried out by the control station when determining that no data to be transmitted has been left in the transmitting station, of withdrawing the permission for the communications provided to the transmitting station and the receiving station even before the specified time period P passes;

wherein the transmitting station sends the series of data packets (109 through 112) at intervals of a non-transmission time $\alpha$ (115 through 118), and

when detecting a non-transmission time $\beta$ (119) longer than the non-transmission time $\alpha$, the receiving station determines that the series of data packets has been received.

2. The communications method according to claim 1, wherein

the transmitting station (2) sends a response request packet (112a) to the receiving station (3) after the series of data packets (109 through 111, 203, 204) has been sent, and

the receiving station determines, based on the response request packet received from the transmitting station, that the series of data packets has been received.

3. The communications method according to claim 2, wherein

when detecting a non-transmission time $\gamma$ (221) longer than the non-transmission time $\alpha$ (220a) after the receiving station (3) has sent a response packet (207), the control station (1) determines that no data to be transmitted has been left in the transmitting station, and withdraws the permission for communications provided to the pair of stations.

4. The communications method according to claim 1, wherein

when detecting a non-transmission time $\gamma$ (221) longer than the non-transmission time $\beta$ (220) after the receiving station (3) has sent a response packet (207), the control station (1) determines that no data to be transmitted has been left in the transmitting station (2), and withdraws the permission for communications provided to the pair of stations.

5. The communications method according to claim 1, further comprising:

a step (S105), carried out by the control station (1), of sending to the pair of stations a report packet (102) which contains the provided permission for communications and the specified time period P and which indicates that the transmitting station (2) is provided with permission to send data packets and the receiving station (3) is provided with permission to send a response packet;

a step (S204), carried out by the transmitting station, of receiving the report packet coming from the control station, wherein the calculating step and the data-packet sending step are carried out based on contents of the report packet; and

a step (S204), carried out by the receiving station, of receiving the report packet coming from the control station, wherein the data-packet receiving step and the response-packet sending step are carried out based on the contents of the report packet, wherein

the response packet (113) sent by the receiving station contains a state of reception of the series of data packets which had been received before the report packet was received.

**Patentansprüche**

1. Datenübertragungsverfahren zum Ausführen von Datenübertragungen zwischen mehreren Stationen (1 - 4) unter Verwendung eines einzigen drahtlosen Kanals, welcher nach Art eines Zeitmultiplexverfahrens zwischen den mehreren Stationen geteilt wird, wobei

jede der mehreren Stationen als eine Kontrollstation (1) zum Steuern der Datenübertragungen zwischen den mehreren Stationen dient, und das Verfahren beinhaltet:

einen Schritt (S104), der durch die Kontrollstation ausgeführt wird, des Selektierens eines Paares von Stationen aus der Mehrzahl der Stationen als eine Sendestation (2) und eine Empfangsstation (3) und Bereitstellen einer Erlaubnis für das Paar von Stationen für die Datenübertragungen unter Verwendung des drahtlosen Kanals während einer vorgegebenen Zeitspanne P,

einen Schritt (S206), der durch die Sendestation ausgeführt wird, des Berechnens der Anzahl von übertragbaren Datenpaketen innerhalb der vorgegebenen Zeitspanne P,

einen Schritt (S207 bis S209), der von der Sendestation ausgeführt wird, des aufeinanderfolgenden Sendens an die Empfangsstation einer Serie von Datenpaketen (109), welche nicht größer ist als die berechnete Anzahl von Datenpaketen,

einen Schritt (S212), der von der Empfangsstation ausgeführt wird, des Beginnens, die Serie von Datenpaketen, welche von der Sendestation stammen, zu empfangen,

einen Schritt (S215), der durch die Empfangsstation ausgeführt wird, des Sendens eines Antwortpaketes (113) an die Sendestation, wenn der Empfang der Serie von Datenpaketen vollständig ist, und

einen Schritt (S107), der durch die Kontrollstation ausgeführt wird, wenn festgestellt wird, dass keine zu übertragenden Daten in der Sendestation verblieben sind, des Aufhebens der Erlaubnis für die Datenübertragung, welche der Sendestation und der Empfangsstation erteilt wurde, auch bevor die vorgegebene Zeitspanne P vorüber ist,

wobei die Sendestation die Serie von Datenpaketen (109 bis 112) in Intervallen einer Nichtsendezeit $\alpha$ (115 bis 117) sendet, und

die Empfangsstation feststellt, dass die Serie von Datenpaketen empfangen worden ist, wenn eine Nichtsendezeit $\beta$ (119) detektiert wird, welche länger ist als die Nichtsendezeit $\alpha$.

2. Datenübertragungsverfahren nach Anspruch 1, wobei die Sendestation (2) ein Antwortaufforderungspaket (112a) an die Empfangsstation (3) sendet, nachdem die Serie von Datenpaketen (109 bis 111, 203, 204) gesendet worden ist, und

die Empfangsstation basierend auf dem von der Sendestation empfangenen Antwortanforderungspaket feststellt, dass die Serie von Datenpaketen empfangen worden ist.

3. Datenübertragungsverfahren nach Anspruch 2, wobei die Kontrollstation (1) feststellt, beim Detektieren einer Nichtsendezeit $\gamma$ (221), die länger ist als die Nichtsendezeit $\alpha$ (220a); nachdem die Empfangsstation (3) das Antwortpaket (207) gesendet hat, dass keine zu sendenden Daten in der Sendestation verblieben sind und die Datenübertragungserlaubnis, welche dem Paar von Stationen zugeteilt wurde, aufhebt.

4. Datenübertragungsverfahren nach Anspruch 1, wobei beim Detektieren einer Nichtsendezeit $\gamma$ (221), die länger ist als die Nichtsendezeit $\beta$ (220), nachdem die Empfangsstation (3) ein Antwortpaket (207) gesendet hat, die Kontrollstation (1) feststellt, dass keine zu sendenden Daten in der Sendestation (2) verblieben sind und die Datenübertragungserlaubnis, welche dem Paar von Stationen zugeteilt wurde, aufhebt.

5. Datenübertragungsverfahren nach Anspruch 1, welches ferner umfasst:

einen Schritt (S105), der von der Kontrollstation (1) ausgeführt wird, des Sendens eines Berichtspaketes (102) an das Paar von Stationen, welches die zugeteilte Datenübertragungserlaubnis und die vorgegebene Zeitspanne P enthält, und welches anzeigt, dass der Sendestation (2) die Erlaubnis erteilt wurde, Datenpakete zu senden und der Empfangsstation (3) die Erlaubnis erteilt worden ist, ein Antwortpaket zu senden,

ein Schritt (S204), welcher von der Sendestation ausgeführt wird, des Empfangens des Berichtspaketes, welches von der Kontrollstation stammt, wobei der Berechnungsschritt und der Datenpaketsendeschritt basierend auf dem Inhalt des Berichtspaketes ausgeführt werden, und

ein Schritt (S204), welcher von der Empfangsstation ausgeführt wird, des Empfangens des Berichtspaketes, welches von der Kontrollstation stammt, wobei der Datenpaketempfangsschritt und der Antwortpaketsendeschritt basierend auf den Inhalten des Berichtpaketes ausgeführt wird, wobei

das Antwortpaket (113), welches von der Empfangsstation gesendet wurde, einen Empfangszustand der Serie von Datenpaketen enthält, welcher empfangen worden ist, bevor das Berichtspaket empfangen wurde.

**Revendications**

1. Procédé de communications pour exécuter des communications parmi une pluralité de stations (1-4) en utilisant un canal sans fil unique qui est partagé par la pluralité de stations par répartition dans le temps, dans lequel l'une quelconque de la pluralité de stations sert de station de commande (1), pour commander les communications parmi la pluralité de stations, et le procédé inclut:

une étape (S 104), exécutée par la station de commande, de sélection d'une paire de stations à partir de la pluralité de stations en tant que stations émettrice (2) et une station réceptrice (3), et consistant à pourvoir la paire de stations de permissions pour les communications utilisant le canal sans fil dans une période de temps P spécifiée;

une étape (S206), exécutée par la station émettrice, de calcul du nombre de paquets de données pouvant être émis durant la période de temps P spécifiée;

une étape (S207 à S209), exécutée par la station émettrice, d'envoi successif à la station réceptrice d'une série de paquets de données (109, 112) non supérieure au nombre de paquets de données calculés;

une étape (S212), exécutée par la station réceptrice, de démarrage d'une réception de la série de paquets de données provenant de la station émettrice;

une étape (S215), exécutée par la station réceptrice, d'envoi d'un paquet de réponse (113) à la station émettrice lors de l'achèvement de la réception de la série de paquets de données; et

une étape (S 107), exécutée par la station de commande en déterminant qu'aucunes données à émettre n'ont été laissées dans la station d'émission, de retrait de la permission pour les communications pourvue à la station émettrice et la station réceptrice même avant que la période de temps P spécifiée ne s'écoule;

dans lequel la station émettrice envoie la série de paquets de données (109 à 112) à des intervalles d'un temps de non transmission α (115 à 118), et

en détectant un temps de non transmission β (119) plus long que le temps de non transmission α, la station réceptrice détermine que la série de paquets de données a été reçue.

2. Procédé de communications selon la revendication 1, dans lequel

la station émettrice (2) envoie un paquet de demande de réponse (112a) à la station réceptrice (3) après que la série de paquets de données (109 à 111, 203, 204) a été envoyée, et

la station réceptrice détermine, sur la base du paquet de demande de réponse reçu depuis la station émettrice, que la série de paquets de données a été reçu.

3. Procédé de communications selon la revendication 2, dans lequel

en détectant un temps de non transmission γ (221) plus long que le temps de non transmission α (220a) après que la station réceptrice (3) a envoyé un paquet de réponse (207), la station de commande (1) détermine qu'aucunes données à émettre n'ont été laissées dans la station émettrice, et retire la permission pour des communications pourvue à la paire de stations.

4. Procédé de communications selon la revendication 1, dans lequel

en détectant un temps de non transmission γ (221) plus long que le temps de non transmission β (220) après que la station réceptrice (3) a envoyé un paquet de réponse (207), la station de commande (1) détermine qu'aucunes données à émettre n'ont été laissées dans la station émettrice (2), et retire la permission pour des communications pourvue à la paire de stations.

5. Procédé de communications selon la revendication 1, dans lequel

une étape (S105), exécutée par la station de commande (1), d'envoi à la paire de stations un paquet de rapport (102) qui contient la permission pourvue pour des communications et la période de temps P spécifiée et qui indique que la station émettrice (2) est pourvue d'une permission pour envoyer des paquets de données et la station réceptrice (3) est pourvue d'une permission pour envoyer un paquet de réponse;

une étape (S204), exécutée par la station émettrice, de réception du paquet de rapport provenant de la station de commande, où l'étape de calcul et l'étape d'envoi de paquet de données sont exécutées sur la base d'un contenu du paquet de rapport; et

une étape (S204), exécutée par la station réceptrice, de réception du paquet de rapport provenant de la station de commande, où l'étape de réception de paquet de données et l'étape d'envoi de paquet de réponse sont exécutées sur la base du contenu du paquet de rapport; où

le paquet de réponse (113) envoyé par la station réceptrice contient un état de réception de la série de paquets de données qui ont été reçus avant que le paquet de rapport n'ait été reçu

# F I G. 1

```
            ┌──────────────┐
            │   WIRELESS   │
            │   STATION    │  ～ 1
            │  (CONTROL    │
            │   STATION)   │
            └──────────────┘
              ↗      ↕      ↖
          2 ↙      3 ↕      ↘ 4
   ┌──────────┐ ┌──────────┐ ┌──────────┐
   │ WIRELESS │ │ WIRELESS │ │ WIRELESS │
   │ STATION  │↔│ STATION  │ │ STATION  │
   └──────────┘ └──────────┘ └──────────┘
```

# F I G. 2

```
                    1 ～ 4

  ┌ ─ ─ ─ ─ ─ ─ ─ ─ ─ ─ ─ ┐        14
  │ ┌─────────────────────┐ │       ┌──────────────────────────┐
  │ │ TRANSMITTING/       │~11      │ CONTROL SECTION          │
  │ │ RECEIVING SECTION   │ │       │              21          │
  │ └─────────────────────┘ │       │       ┌────────────┐     │
  │          ↕              │       │       │    CPU     │     │
  │ ┌─────────────────────┐ │~12    │       └────────────┘     │
  │ │ PACKET PROCESSING   │←┼──→←──→ │            │             │
  │ │ SECTION             │ │       │ ───┬──────┴──────┬───    │
  │ └─────────────────────┘ │       │    │             │       │
  │          ↕              │       │ ┌──────┐      ┌──────┐    │
  │ ┌─────────────────────┐ │~13    │ │ ROM  │      │ RAM  │    │
  │ │ STORAGE SECTION     │ │       │ └──────┘      └──────┘    │
  │ └─────────────────────┘ │       │    22            23      │
  └ ─ ─ ─ ─ ─ ─ ─ ─ ─ ─ ─ ┘        └──────────────────────────┘
```

# F I G. 3

(a)

22

31

COMMUNICATIONS
PROGRAM

32

POLLING PROGRAM

ROM IN CONTROL STATION

(b)

22

31

COMMUNICATIONS
PROGRAM

ROM IN WIRELESS STATION

# F I G. 4

START

READ POLLING LIST — S101

POLLING ACCESS PERIOD STARTED ? — S102
N

Y

SEND Beacon PACKET — S103

REFER TO POLLING LIST TO SELECT PAIR OF TRANSMITTING STATION AND RECEIVING STATION AND PROVIDE PAIR WITH PERMISSION FOR COMMUNICATIONS — S104

SEND CF-Multipoll PACKET — S105

NON-TRANSMISSION PERIOD $\gamma$ ($>\alpha$) DETECTED ? — S106
N

Y

PROHIBIT PERMISSION FOR COMMUNICATIONS — S107

POLLING ACCESS PERIOD HAS ENDED ? — S108
N

Y

SEND CF-End PACKET — S109

CONTINUE ? — S110
Y

N

END

# F I G. 5

| PRIORITY LEVEL | DATA TRANSMITTING STATION | DATA RECEIVING STATION |
|---|---|---|
| 1 | WIRELESS STATION 2 | WIRELESS STATION 3 |
| 2 | CONTROL STATION 1 | WIRELESS STATION 3 |
| 3 | WIRELESS STATION 3 | CONTROL STATION 1 |
| 4 | WIRELESS STATION 4 | CONTROL STATION 1 |
| 5 | CONTROL STATION 1 | WIRELESS STATION 2 |
| 6 | CONTROL STATION 1 | WIRELESS STATION 4 |

# F I G. 6

CF-Multipoll PACKET

| 41 | 42 | 43 |
|---|---|---|
| DESTINATION | PERMISSION FOR COMMUNICATIONS | TIME |

SPECIFIED TIME ALLOWABLE FOR COMMUNICATION (P)

{ PERMISSION FOR Data PACKET TRANSMISSION PROVIDED TO TRANSMITTING STATION
PERMISSION FOR DelayAck PACKET TRANSMISSION PROVIDED TO RECEIVING STATION }

{ IDENTIFIER OF TRANSMITTING STATION
IDENTIFIER OF RECEIVING STATION }

# F I G. 7

DelayAck PACKET

| 51 | 52 |
|---|---|
| DESTINATION | STATE OF RECEPTION |

STATE OF RECEPTION OF SERIES OF Data PACKETS RECEIVED BEFORE CF-Multipoll PACKET COMES

IDENTIFIER OF TRANSMITTING STATION

## F I G. 8

```
                    ┌─────────┐
                    │  START  │
                    └─────────┘
                         │
        ┌─────────────────────────────────┐  S201
        │ OPERATE IN RANDOM ACCESS        │
        │ MODE                            │
        └─────────────────────────────────┘
                         │
                    ╱─────────╲  S202
           N   ╱ Beacon PACKET  ╲
        ◄─────╲  RECEIVED ?     ╱
                ╲───────────────╱
                         │ Y
        ┌─────────────────────────────────┐  S203
        │ GOES TO POLLING ACCESS MODE     │
        └─────────────────────────────────┘
                         │
        ┌─────────────────────────────────┐  S204
        │ RECEIVE CF-Multipoll PACKET     │
        └─────────────────────────────────┘
                         │
                ╱─────────────────╲  S205
           ╱  PERMISSION FOR        ╲         N
          ╱ Data PACKET TRANSMISSION ╲─────────────────────┐
           ╲     PROVIDED ?         ╱                       │
                ╲─────────────────╱                         │
                         │ Y                       ╱────────────────────╲  S211
        ┌─────────────────────────────────┐  S206 ╱  PERMISSION FOR       ╲  N
        │ CALCULATE THE NUMBER OF Data    │      ╱ DelayAck PACKET TRANSMISSION╲──┐
        │ PACKETS TRANSMITTABLE DURING    │       ╲    PROVIDED ?         ╱       │
        │ SPECIFIED TIME PERIOD P         │            ╲────────────────╱         │
        └─────────────────────────────────┘                    │ Y                │
                         │                        ┌──────────────────────────┐ S212
        ┌─────────────────────────────────┐  S207 │ START RECEIVING SERIES OF Data│
        │ START Data PACKET TRANSMISSION  │      │ PACKETS SUCCESSIVELY SENT AT  │
        └─────────────────────────────────┘      │ INTERVALS OF NON-TRANSMISSION │
                         │                        │ TIME α                        │
                ╱─────────────────╲               └──────────────────────────┘
           ╱      THE              ╲  S208                    │
          ╱  NUMBER OF Data         ╲             ╱─────────────────────╲  S213
     N   ╱ PACKETS TRANSMITTED REACHES╲      N   ╱   NON-TRANSMISSION     ╲
    ◄────╲    CALCULATED             ╱    ◄──────╲  TIME β (>α) DETECTED   ╱
          ╲   NUMBER ?              ╱              ╲         ?            ╱
                ╲───────────────╱                   ╲──────────────────╱
                         │ Y                                 │ Y
        ┌─────────────────────────────────┐  S209  ┌──────────────────────────┐ S214
        │ STOP Data PACKET TRANSMISSION   │        │ STOP RECEIVING Data PACKETS│
        └─────────────────────────────────┘        └──────────────────────────┘
                         │                                   │
        ┌─────────────────────────────────┐  S210  ┌──────────────────────────┐ S215
        │ RECEIVE DelayAck PACKET         │        │ SEND DelayAck PACKET      │
        └─────────────────────────────────┘        └──────────────────────────┘
                         │◄──────────────────────────────────┘
                ╱─────────────────╲  S216
           N   ╱ CF-End PACKET     ╲
        ◄─────╲  RECEIVED ?        ╱
                ╲───────────────╱
                         │ Y
                ╱─────────────────╲  S217
           Y   ╱                   ╲
        ◄─────╲    CONTINUE ?      ╱
                ╲───────────────╱
                         │ N
                    ┌─────────┐
                    │   END   │
                    └─────────┘
```

# F I G. 9

```
                            ( S201 )
                               │
                               ▼
            ╱─────────────────────────────╲ ── S301
           ╱         DATA TO BE             ╲
           ╲         SENT EXIST ?           ╱ ──────────────────────────┐
            ╲─────────────────────────────╱  N                          │
                       │ Y                                               ▼
                       ▼                              ╱─────────────────────────────╲ ── S311
            ╱─────────────────────────────╲ ── S302 ╱         RTS PACKET             ╲
           ╱      WIRELESS CIRCUIT          ╲        ╲      RECEIVED ?                ╱
       ┌── ╲         IN USE ?               ╱        ╲─────────────────────────────╱  N
       │ Y  ╲─────────────────────────────╱                    │ Y
       │               │ N                                      ▼
       │               ▼                              ┌──────────────────────────────┐ ── S312
       │    ┌───────────────────────────┐ ── S303     │      SEND CTS PACKET          │
       │    │  SEND RTS PACKET IN RANDOM │             └──────────────────────────────┘
       │    │  TIMING                    │                          │
       │    └───────────────────────────┘                          ▼
       │               │                              ┌──────────────────────────────┐ ── S313
       │               ▼                              │  RECEIVE CF-Multipoll PACKET  │
       │    ┌───────────────────────────┐ ── S304     └──────────────────────────────┘
       │    │  RECEIVE CTS PACKET (OBTAIN│                          │
       │    │  PERMISSION FOR COMMUNICATION)│                       ▼
       │    └───────────────────────────┘             ┌──────────────────────────────┐ ── S314
       │               │                              │  START RECEIVING SERIES OF Data│
       │               ▼                              │  PACKETS SUCCESSIVELY SENT AT  │
       │    ┌───────────────────────────┐ ── S305     │  INTERVALS OF NON-TRANSMISSION │
       │    │  SEND CF-Multipoll PACKET  │             │  TIME α                        │
       │    └───────────────────────────┘             └──────────────────────────────┘
       │               │                                          │
       │               ▼                                          ▼
       │    ┌───────────────────────────┐ ── S306     ╱─────────────────────────────╲ ── S315
       │    │  CALCULATE THE NUMBER OF Data│          ╱      NON-TRANSMISSION         ╲
       │    │  PACKETS TRANSMITTABLE DURING│    ┌──── ╲   TIME β (>α) DETECTED        ╱
       │    │  SPECIFIED TIME PERIOD P   │     │  N   ╲            ?                  ╱
       │    └───────────────────────────┘     │       ╲─────────────────────────────╱
       │               │                       │                  │ Y
       │               ▼                       │                  ▼
       │    ┌───────────────────────────┐ ── S307│      ┌──────────────────────────────┐ ── S316
       │    │  START Data PACKET TRANSMISSION│   │      │  STOP Data PACKET RECEPTION   │
       │    └───────────────────────────┘       │      └──────────────────────────────┘
       │               │ ◄─────────────────────┘                  │
       │               ▼                                          ▼
       │    ╱─────────────────────────────╲ ── S308    ┌──────────────────────────────┐ ── S317
       │   ╱         THE                    ╲           │  SEND DelayAck PACKET         │
       │  ╱       NUMBER OF                  ╲          └──────────────────────────────┘
       │  ╲  Data PACKETS TRANSMITTED        ╱                     │
       │   ╲   REACHES CALCULATED           ╱                      │
       │  N ╲      NUMBER ?                ╱                        │
       │     ╲─────────────────────────────╱                       │
       │               │ Y                                         │
       │               ▼                                           │
       │    ┌───────────────────────────┐ ── S309                  │
       │    │  STOP Data PACKET TRANSMISSION│                       │
       │    └───────────────────────────┘                          │
       │               │                                           │
       │               ▼                                           │
       │    ┌───────────────────────────┐ ── S310                  │
       │    │  RECEIVE DelayAck PACKET (LOSE│                       │
       │    │  PERMISSION FOR COMMUNICATION)│                       │
       │    └───────────────────────────┘                          │
       │               │                                           │
       └───────────────┼───────────────────────────────────────────┘
                       ▼
                  ( TO S202 )
```

F I G . 1 0

# FIG. 11

EP 1 271 850 B1

FIG. 12

## FIG. 13

```
                    START

              OPERATE IN RANDOM ACCESS          S201a
              MODE

                  Beacon PACKET                 S202
          N       RECEIVED ?

                        Y

              GOES TO POLLING ACCESS MODE        S203

              RECEIVE CF-Multipoll PACKET        S204

                PERMISSION FOR                   S205
              Data PACKET TRANSMISSION
                  PROVIDED ?            N

                        Y
                                                      PERMISSION FOR          S211
         CALCULATE THE NUMBER OF Data    S206    DelayAck PACKET TRANSMISSION
         PACKETS TRANSMITTABLE DURING               PROVIDED ?          N
         SPECIFIED TIME PERIOD P
                                                        Y            S212
         START Data PACKET TRANSMISSION   S207   START RECEIVING SERIES OF Data
                                                 PACKETS SUCCESSIVELY SENT AT
                                                 INTERVALS OF NON-TRANSMISSION
                     THE                         TIME α
                 NUMBER OF Data          S208
          PACKETS TRANSMITTED REACHES
                 CALCULATED                               AckReq                S213a
          N      NUMBER ?                         N     PACKET RECEIVED ?

                        Y                                      Y            S214
         STOP Data PACKET TRANSMISSION    S209   STOP RECEIVING Data PACKETS

              SEND AckReq PACKET          S209a                             S215

              RECEIVE DelayAck PACKET     S210        SEND DelayAck PACKET

                  CF-End PACKET                  S216
          N       RECEIVED ?

                        Y

                  CONTINUE ?                     S217
          Y

                        N

                     END
```

F I G. 1 4

```
            ( S201a )
               │
               ▼
          ╱─────────╲  S301
         ╱  DATA TO BE ╲─────────────────────────────┐
         ╲  SENT EXIST ? ╱                 N          │
          ╲─────────╱                                 │
               │ Y                                     ▼
               ▼                              ╱──────────────╲  S311
          ╱─────────╲  S302            ┌─────╱  RTS PACKET    ╲
     ┌───╱ WIRELESS CIRCUIT╲           │     ╲  RECEIVED ?     ╱─┐
     │ Y ╲   IN USE ?    ╱             │      ╲──────────────╱ N │
     │    ╲─────────╱                  │           │ Y           │
     │         │ N                     │           ▼             │
     │         ▼                       │  ┌──────────────────┐   │
     │ ┌──────────────────────┐ S303   │  │ SEND CTS PACKET  │S312
     │ │ SEND RTS PACKET IN RANDOM│    │  └──────────────────┘   │
     │ │ TIMING               │        │           │             │
     │ └──────────────────────┘        │           ▼             │
     │         │                       │  ┌──────────────────────┐S313
     │         ▼                       │  │ RECEIVE CF-Multipoll PACKET│
     │ ┌──────────────────────┐ S304   │  └──────────────────────┘
     │ │ RECEIVE CTS PACKET   │        │           │
     │ └──────────────────────┘        │           ▼
     │         │                       │  ┌────────────────────────────┐S314
     │         ▼                       │  │ START RECEIVING SERIES OF Data│
     │ ┌──────────────────────┐ S305   │  │ PACKETS SUCCESSIVELY SENT AT │
     │ │ SEND CF-Multipoll PACKET│     │  │ INTERVALS OF NON-TRANSMISSION │
     │ └──────────────────────┘        │  │ TIME α                       │
     │         │                       │  └────────────────────────────┘
     │         ▼                       │           │
     │ ┌──────────────────────┐ S306   │           ▼
     │ │ CALCULATE THE NUMBER OF Data│  │      ╱──────────────╲  S315a
     │ │ PACKETS TRANSMITTABLE DURING│  │ ┌───╱  AckReq PACKET  ╲
     │ │ SPECIFIED TIME PERIOD P │   │  │ │   ╲  RECEIVED ?     ╱
     │ └──────────────────────┘       │  │ │ N  ╲──────────────╱
     │         │                       │  │ └────────┘│ Y
     │         ▼                       │  │           ▼
     │ ┌──────────────────────┐ S307   │  │  ┌──────────────────────┐S316
     │ │ START Data PACKET TRANSMISSION│ │  │ STOP Data PACKET RECEPTION│
     │ └──────────────────────┘        │  │  └──────────────────────┘
     │         │                       │  │           │
     │         ▼◄──────────┐           │  │           ▼
     │    ╱─────────╲      │           │  │  ┌──────────────────────┐S317
     │   ╱   THE     ╲ S308│           │  │  │ SEND DelayAck PACKET │
     │  ╱  NUMBER OF  ╲    │           │  │  └──────────────────────┘
     │ ╱ Data PACKETS TRANSMITTED╲     │  │
     │ ╲ REACHES CALCULATED ╱      │   │  │
     │  ╲   NUMBER ?    ╱  │ N      │   │  │
     │   ╲─────────╱──────┘          │  │  │
     │         │ Y                    │  │
     │         ▼                       │
     │ ┌──────────────────────┐ S309   │
     │ │ STOP Data PACKET TRANSMISSION│ │
     │ └──────────────────────┘        │
     │         │                       │
     │         ▼                       │
     │ ┌──────────────────────┐ S309a  │
     │ │ SEND AckReq PACKET   │        │
     │ └──────────────────────┘        │
     │         │                       │
     │         ▼                       │
     │ ┌──────────────────────┐ S310   │
     │ │ RECEIVE DelayAck PACKET│       │
     │ └──────────────────────┘        │
     └─────────┤◄──────────────────────┘
               ▼
          ( TO S202 )
```

# FIG. 15

EP 1 271 850 B1

# FIG. 16

CF-Multipoll

P3

201  202  203  204  205a

WIRELESS
STATION 1

RTS  Data  Data  AckReq

P4

DelayAck

206  207  208  209  210  211  212a

WIRELESS
STATION 4

CTS  RTS  Data  Data  Data  AckReq

213  214

CF-Multipoll  DelayAck

WIRELESS
STATION 3

α    α    α    α    α    α    γ          α    α    α    α    α    α    γ
215  216  217  218  219  220a 221        222  223  224  225  226  227a 228

EP 1 271 850 B1

F I G. 1 7

EP 1 271 850 B1

# FIG. 18

601  602  603  604  605  606

| Busy Medium | | RTS | CTS | Data | ACK | Data | ACK | | Busy Medium |

TIME-OUT PERIOD 607

F I G. 1 9

CONTROL
STATION ⌇501

502
WIRELESS
STATION

503
WIRELESS
STATION

504
WIRELESS
STATION

# FIG. 20

EP 1 271 850 B1